# EUROPEAN PATENT SPECIFICATION

(11) **EP 2 600 692 B1**
(45) Date of publication and mention of the grant of the patent: **13.09.2017**
(21) Application number: 13153590.8
(22) Date of filing: 13.01.2011
(51) Int. Cl.: H05B 6/06, H05B 6/12

(54) **Induction cooking system**
Induktionskochsystem
Système de cuisson par induction

(30) Priority: 19.03.2010 JP 2010064163
(43) Date of publication of application: 05.06.2013
(62) Divisional of application: 11755796.7
(73) Proprietor: Mitsubishi Electric Corporation, Chiyoda-ku Tokyo 100-8310 (JP); MITSUBISHI ELECTRIC HOME APPLIANCE CO., LTD, Saitama 369-1295 (JP)
(72) Inventor: Masuda, Ichiro, Saitama 369-1295 (JP); Kawata, Yukio, Saitama 369-1295 (JP); Tanaka, Michio, Saitama 369-1295 (JP)
(74) Representative: Pfenning, Meinig & Partner mbB

(56) References cited:
- WO-A2-2008/042805
- JP-A- 2009 218 040
- JP-A- 2009 218 041
- JP-A- 2009 218 106
- US-A1- 2004 238 524
- US-A1- 2007 262 072

## Description

### Technical Field

The present invention relates to an induction cooking system that displays a position to place a heated object on a top plate.

### Background Art

JP 2009 218041 A: An induction heating cooking appliance being provided with a plurality of heating coils including at least a first heating coil and a second heating coil, light emitting portions which emit light and indicate a mounting position of a heating object, a light emitting controlling portion for controlling light emission of the light emitting portion, and a heating object mounting decision portion for making a decision whether the same heating object is mounted above the first heating coil and the second heating coil. When the heating object mounting decision portion decides that the same heating object is mounted above the first heating coil and the second heating object, a heating controlling portion drives the first heating coil and the second heating coil together and the light emitting controlling portion lights up the light emitting portion for a user's recognition of the operation.

JP 2009 218040 A: An induction cooking device including a controlling portion and a plurality of light emitting portions. The controlling portion includes a heating controlling portion for controlling an output of an inverter circuit and a light emitting controlling portion for controlling light emission. When instructions to heat one heating object by one heating coil are input from an operation portion, a light emitting portion only, arranged in the vicinity of an outer circumference of the heating coil which starts heating, is lit up by the controlling portion, and when the instructions to heat one heating object by a plurality of heating coils of which the center is at different positions and which adjoins each other are input from the operation portion, the light emitting portion arranged between the heating coils which start heating, out of the light emitting portions arranged around the outer circumference of each of the heating coil which start heating, is put off, and all the light emitting portions other than the put-off light emitting portion are lit up.

WO 2008/042805 A2: Discloses, among other things, light that carries information about cooking is directed in a first direction towards a redirection element and, at the redirection element, the light is redirected to be visible to a person cooking.

US 2004238524 A1: Method of warning individuals about hot surfaces on stoves and related appliances containing multiple heating elements by installing a configuration of light emitting diodes (or organic LEDs) that comprises a heat warning symbol specific to that one heating element, the LEDs receiving electric power whenever a specified temperature of that heating element is exceeded in accordance with a controller that receives information from the heat sensor adjacent the heating element. The symbols are positioned so that an observer approaching a heating element of stove from any direction when the heating element is dangerously hot can understand the symbol for that heating element.

Cooking systems that perform induction heating of a heated object, such as a metal pan, with a heating coil has been recognized by consumers for their safety, cleanliness, and high efficiency and has gradually become popular in recent years. Such induction cooking systems are broadly categorized by their installation form into a table-top type that is used by placing the system on a top side of a sink cabinet or the like and a built-in (embedded) type that is set in an installation space of kitchen furniture such as a sink cabinet. In either type, widely known induction cooking systems are ones with a top side covered with a top plate (also referred to as "top") formed by a heat-resisting glass plate or the like on substantially all of the top side and ones provided with, below the top plate, a linear illuminant having a light source and a light guide that guides light of the light source. As such, since a vivid circular figure can be displayed on the top plate, it will be possible to clearly display the position (heating unit) to place the heated object and to display whether during heating or not (Patent Literature 1).

Further, as another induction cooking system, one that can heat an elliptical pan having a large bottom diameter, for example, by placing the pan on two neighboring heating coils has been proposed. Such a cooking system includes a first heating coil that heats a heated object, a second heating coil that similarly heats a heated object, light emitting units that indicate placement positions of the first heating coil and the second heating coil, a light emission control unit that controls emission and lighting, and a placement-of-heated-object determination unit that determines whether the same single heated object is placed above the first heating coil and the second heating coil, in which the heating cooker is configured such that when the placement-of-heated-object determination unit determines that the same single heated object is placed above the first heating coil and the second heating coil, the heating controller causes the first heating coil and the second heating coil to operate in association with each other, and the light emission control unit causes the light emitting units corresponding to each of the placement position of the first heating coil and the placement position of the second heating coil to be collectively (simultaneously) emitted and lighted, so that a user can recognize the operation (Patent Literature 2).

### Citation List

### Patent Literature

Patent Literature 1: Japanese Patent No. 3941812
Patent Literature 2: Japanese Unexamined Patent Application Publication No. 2009-218041 (page 1, page 2, Fig. 1)

### Summary of Invention

### Technical Problem

However, hitherto, an appropriate display method of the placing position of the heated object has not been proposed for a case in which, centering around a single heating coil (hereinafter, referred to as "main heating coil"), a different auxiliary heating coil (although also called an auxiliary heating coil; however, hereinafter, will be uniformly referred to as "sub heating coil") on both sides or around the vicinity of the main heating coil is provided to heat-cook the same single heated object such as a pan or the like by driving the main heating coil and the sub heating coil at the same time. In particular, when sub heating coils are arranged around the main heating coil in plural numbers, there are cases in which the user will be confused, at first, on where to place the pan. As a matter of course, printing circular marks on the top side of the top plate corresponding to the heating area of the main heating coil and the sub heating coils may be considered. However, since the operating sub heating coil changes during the heat-cooking and since it will not be possible to display the display corresponding to the change in real time, disadvantageously, mere indication of such graphics cannot convey information to the user such as the preferable placing position of the pan and, even, cannot convey information on which sub heating coil is used at the moment.

The invention is further described in independent claim 1 and has been made in view of the above disadvantages, and provides an induction cooking system that is capable of displaying the placing position of a heated object in a case in which the same single heated object such as a pan or the like is heat-cooked by cooperation of a main heating coil and a sub heating coil. Note that the placing position of the heated article in the invention is an approximate position where the pan and the like are heated by the heating coil. In other words, it is not a strict position where even a subtle deviation of the placing position of the heated article will totally hinder the induction heating action. This is because, strictly speaking, the optimum placing position of the pan will slightly vary depending on the external shape of the pan and the shape and material property of the bottom of the pan.

The following induction cooking system shows parts of the invention: The system includes a top plate that allows penetration of light; a main heating coil heating a heated object placed on the top plate by generating an induction field; a sub heating coil being disposed outside the main heating coil, the sub heating coil heating the heated object placed on the top plate; inverter circuits supplying high-frequency current to each of the main heating coil and the sub heating coil; a heating control unit controlling output of each of the inverter circuits; a wide area light emitting unit radiating light from below the top plate and indicating a predetermined wide heating area that covers a heated-object placing position of the main heating coil and sub heating coil; an individual light emitting unit performing display that specifies the sub heating coil when the main heating coil and the sub heating coil are made to cooperatively perform a heating operation; a light emission control unit controlling emitting and lighting of the wide area light emitting unit and the individual light emitting unit; and a placement-of-heated-object determination unit determining whether a same single heated object is placed above the main heating coil and the sub heating coil, wherein in a state in which the placement-of-heated-object determination unit has determined that the same single heated object is placed above the main heating coil and the sub heating coil, the heating control unit makes the main heating coil and the sub heating coil perform the cooperative heating operation and the light emission control unit makes each of the wide area light emitting unit and the individual light emitting unit be emitted and lighted.

According to the above aspects of the invention, since the heating region that can be cooperatively heated by the main heating coil and the sub heating coil is displayed by emitting and lighting the wide area light emitting unit, the user can visually confirm the preferable heating region. Accordingly, when a non-circular pan such as an elliptical pan is placed, when this kind of pan is moved to the side during cooking, or when the pan is unintentionally shifted, display by emitting and lighting the wide area light emitting unit can show whether the placed position is suitable or not and can be an approximate guide of the shifting limit. In particular, in a case in which a sub heating coil is disposed on both left and right sides of the main heating coil or one or more sub heating coils are disposed on each of the front, back, left, and right sides of the main heating coil, since the heating area including the centering main heating coil and the sub heating coils are displayed by the emitting and lighting of the wide area light emitting unit and since the specific heating coil that is performing the cooperative heating operation can be visually confirmed, the induction heating can be advantageously performed in a wide area where multiple sub heating coils exist and the mental load of the user can be advantageously reduced.

The following induction cooking system shows aspects of the invention: The system includes a top plate that allows penetration of light; a main heating coil heating a heated object placed on the top plate by generating an induction field; a first sub heating coil and a second sub heating coil being disposed outside the main heating coil, the sub heating coils heating the heated object placed on the top plate; inverter circuits supplying high-frequency current to each of the main heating coil and the first and second sub heating coils; a heating control unit controlling an output of each of the inverter circuits; a first individual light emitting unit performing a "first display" that specifies the first sub heating coil at a vicinity of the first sub heating coil when the main heating coil is performing heating operation; a second individual light emitting unit performing a "first display" that specifies the second sub heating coil at a vicinity of the second sub heating coil when the main heating coil is performing heating operation; a light emission control unit controlling emitting and lighting of the first and second individual light emitting units; and a placement-of-heated-object determination unit determining whether a same single heated object is placed above the main heating coil and the sub heating coils, wherein in a state in which the placement-of-heated-object determination unit has determined that the same single heated object is placed above the main heating coil and either one of the first and second sub heating coils, the heating control unit makes the main heating coil and either one of the first and second sub heating coils perform a cooperative heating operation and the light emission control unit makes either one of the first and second individual light emitting units corresponding to either one of the first and second sub heating coils that is performing the cooperative heating operation into a "second display" form different to the first display.

According to the above aspects of the invention, in a state in which the individual light emitting unit is emitting and lighted in the "first display", the user can visually confirm the heating region that can be cooperatively heated by the main and sub heating coils and it will be an approximate guide of the shifting limit when placing a non-circular pan such as an elliptical pan or when shifting the pan during cooking.
Further, during cooperative heating, since the individual light emitting unit of the first or second sub heating coil involved in the cooperative cooking changes its display to the "second form", the difference between the other sub heating coil can be understood and the auxiliary heating coil performing cooperative heating can be grasped. Note that the "first display" and the "second display" refer to a difference or change of various display form that the user can visually confirm such as the color and brightness of the emitted and lighted light and continuous lighting or a flashing state.

The following induction cooking system shows aspects of the invention: The system includes a top plate that allows penetration of light; a main heating coil heating a heated object placed on the top plate by generating an induction field; a sub heating coil being disposed outside the main heating coil, the sub heating coil heating the heated object placed on the top plate; inverter circuits supplying high-frequency current to each of the main heating coil and the sub heating coil; a heating control unit controlling an output of each of the inverter circuit; a wide area light emitting unit radiating light from below the top plate and indicating a predetermined wide heating area that covers a heating-object placing position of the main heating coil and auxiliary heating coil; a main heating coil light emitting unit radiating light from below the top plate and indicating the heating area of the main heating coil; an individual light emitting unit performing display that is different to the display of the wide area light emitting unit to specify the sub heating coil when the sub heating coil and the main heating coil are made to cooperatively perform a heating operation; a light emission control unit controlling emitting and lighting of the wide area light emitting unit, the main heating coil light emitting unit, and the individual light emitting unit; and a placement-of-heated-object determination unit determining whether a same single heated object is placed above the main heating coil and the sub heating coil, wherein in a state in which the placement-of-heated-object determination unit has determined that the same single heated object is placed above the main heating coil and the sub heating coil, the heating control unit makes the main heating coil and the sub heating coil perform the cooperative heating operation, as well as the light emission control unit making each of the wide area light emitting unit and the individual light emitting unit be emitted and lighted, and
in a state in which the placement-of-heated-object determination unit has determined that the heated object is placed above the main heating coil alone, the heating control unit makes the main heating coil alone perform the heating operation and the light emission control unit makes the main heating coil light emitting unit be emitted and lighted.

According to the above aspects of the invention, in a state in which the wide area light emitting unit is emitting and lighted, the user can visually confirm the heating region that can be cooperatively heated by the main and sub heating coils and it will be an approximate guide of the shifting limit when placing a non-circular pan such as an elliptical pan or when shifting the pan during cooking. Further, during cooperative heating, the sub heating coil that is involved in the cooperative heating can be grasped and the user can understand easily that the pan is not to be shifted further to the outside. Furthermore, when heating with the main heating coil alone, since only the heating region of the main heating coil is displayed by the emitting and lighting of the main heating coil light emitting unit, it can be easily understood that heating can be continued at the placed position.

### Advantageous Effects of Invention

In a first further advantageous embodiment the invention may relate to an induction cooking system, comprising:
a top plate that allows penetration of light;
a main heating coil heating a heated object placed on the top plate by generating an induction field;
a sub heating coil being disposed outside the main heating coil, the sub heating coil heating the heated object placed on the top plate;
inverter circuits supplying high-frequency current to each of the main heating coil and the sub heating coil;
a heating control unit controlling output of each of the inverter circuits;
a wide area light emitting unit radiating light from below the top plate and indicating a predetermined wide heating area that covers a heated-object placing position of the main heating coil and sub heating coil;
an individual light emitting unit performing display that specifies the sub heating coil when the sub heating coil and the main heating coil are made to cooperatively perform a heating operation;
a light emission control unit controlling emitting and lighting of the wide area light emitting unit and the individual light emitting unit; and
a placement-of-heated-object determination unit determining whether a same single heated object is placed above the main heating coil and the sub heating coil, wherein
in a state in which the placement-of-heated-object determination unit has determined that the same single heated object is placed above the main heating coil and the sub heating coil, the heating control unit makes the main heating coil and the sub heating coil perform the cooperative heating operation and the light emission control unit makes each of the wide area light emitting unit and the individual light emitting unit be emitted and lighted.

In a second further advantageous embodiment the invention may relate to an induction cooking system, comprising:
a top plate that allows penetration of light;
a main heating coil heating a heated object placed on the top plate by generating an induction field;
a first sub heating coil and a second sub heating coil being disposed outside the main heating coil, the sub heating coils heating the heated object placed on the top plate;
inverter circuits supplying high-frequency current to each of the main heating coil and the first and second sub heating coils;
a heating control unit controlling output of each of the inverter circuits;
a first individual light emitting unit performing a "first display" that specifies the first sub heating coil at a vicinity of the first sub heating coil when the main heating coil is performing heating operation;
a second individual light emitting unit performing a "first display" that specifies the second sub heating coil at a vicinity of the second sub heating coil when the main heating coil is performing heating operation;
a light emission control unit controlling emitting and lighting of the first and second individual light emitting units; and
a placement-of-heated-object determination unit determining whether a same single heated object is placed above the main heating coil and the sub heating coils, wherein
in a state in which the placement-of-heated-object determination unit has determined that the same single heated object is placed above the main heating coil and either one of the first and second sub heating coils, the heating control unit makes the main heating coil and the either one of the first and second sub heating coils perform a cooperative heating operation and the light emission control unit makes the either one of the first and second individual light emitting units corresponding to the either one of the first and second sub heating coils that is performing the cooperative heating operation into "second display" form different to the first display.

In a third further advantageous embodiment the invention may relate to an induction cooking system, comprising:
a top plate that allows penetration of light;
a main heating coil heating a heated object placed on the top plate by generating an induction field;
a sub heating coil being disposed outside the main heating coil, the sub heating coil heating the heated object placed on the top plate;
inverter circuits supplying high-frequency current to each of the main heating coil and the sub heating coil;
a heating control unit controlling output of each of the inverter circuits;
a wide area light emitting unit radiating light from below the top plate and indicating a predetermined wide heating area that covers a heated-object placing position of the main heating coil and sub heating coil;
a main heating coil light emitting unit radiating light from below the top plate and indicating the heating area of the main heating coil;
an individual light emitting unit performing display that is different to the display of the wide area light emitting unit to specify the sub heating coil when the sub heating coil and the main heating coil are made to cooperatively perform a heating operation;
a light emission control unit controlling emitting and lighting of the wide area light emitting unit, the main heating coil light emitting unit, and the individual light emitting unit; and
a placement-of-heated-object determination unit determining whether a same single heated object is placed above the main heating coil and the sub heating coil, wherein
in a state in which the placement-of-heated-object determination unit has determined that the same single heated object is placed above the main heating coil and the sub heating coil, the heating control unit makes the main heating coil and the sub heating coil perform the cooperative heating operation, as well as the light emission control unit making each of the wide area light emitting unit and the individual light emitting unit be emitted and lighted, and
in a state in which the placement-of-heated-object determination unit has determined that the heated object is placed above the main heating coil alone, the heating control unit makes the main heating coil alone perform the heating operation, as well as the light emission control unit making the main heating coil light emitting unit be emitted and lighted.

The induction cooking system of any one the first to third further advantageous embodiment may include that
the placement-of-heated-object determination unit
includes a temperature detecting unit that determines whether a heated object is placed above an area between the main heating coil and the sub heating coil,
determines that no heated object is placed when the temperature detecting unit does not detect a predetermined temperature or determines that a heated object is placed when the temperature detecting unit detects a predetermined temperature.

The induction cooking system of any one the first to third further advantageous embodiment may include that the placement-of-heated-object determination unit
includes a light detecting unit that determines whether a heated object is placed above an area between the main heating coil and the sub heating coil,
determines that no heated object is placed when the light detecting unit detects ambient light or determines that a heated object is placed when the light detecting unit detects no ambient light.

The induction cooking system of any one of the first to third further advantageous embodiment may include that
the placement-of-heated-object determination unit
   includes a main material property determination unit that determines a material property of a heated object placed above the main heating coil and a sub material property determination unit that determines a material property of a heated object placed above the sub heating coil
   determines that a same single heated object is placed above the main heating coil and the sub heating coil when the material property determined by the main material property determination unit and the material property determined by the sub material property determination unit are the same.

The induction cooking system of the first to third further advantageous embodiment may further comprise a figure being provided on at least either one of a top side and a bottom side of the top plate corresponding to the range of the wide area light emitting unit, the figure being an approximate guide of an area that can be heated by independent heating of the main heating coil.

The induction cooking system of the first to third further advantageous embodiment may include that wherein the top plate is provided with a coating, which does not transmit visible ray, on either one of a top side and a bottom side other than portions of the wide area light emitting unit and the individual light emitting unit.

The induction cooking system of the first to third further advantageous embodiment may include that the individual light emitting unit is provided to a position that is an outer circumferential edge of the wide area light emitting unit.

The induction cooking system of the first to third further advantageous embodiment may include that the wide area light emitting unit performs an emitting and lighting operation before a start of the cooperative heating operation of the main heating coil and the sub heating coil and is emitted and lighted during the cooperative heating of the main heating coil and the sub heating coil.

The induction cooking system of the third further advantageous embodiment may include that the main heating coil light emitting unit performs an emitting and lighting operation before a start of the cooperative heating operation of the main heating coil and the sub heating coil and is turned off during the cooperative heating of the main heating coil and the sub heating coil.

The induction cooking system of any one of the first to third further advantageous embodiment may include that wherein
the main heating coil has a circular planer shape with the main heating coil light emitting unit provided on a concentric circle with the main heating coil and with the wide area light emitting unit outside the main heating coil light emitting unit, and
the sub heating coil is disposed in an area interposed between the main heating coil light emitting unit and the wide area light emitting unit.

The induction cooking system of any one of the first to third further advantageous embodiment may include that the main heating coil has a circular planer shape, and
sub heating coils are disposed on a concentric circle with the main heating coil and on the front, back, left, and right positions of the main heating coil, each of the sub heating coils having an elliptical shape or a curved shape sunken on the side that is adjacent to the main heating coil

Since the invention is configured as above, visual confirmation of the sub heating coil that is heated and driven in cooperation with the main heating coil during heating can be made, and the user can recognize the placing position of the pan and the like that is suitable for the cooperative heating with the main heating coil and the sub heating oil in the course of cooking. Accordingly, an induction cooking system that has high usability can be provided.

### Brief Description of Drawings

[Fig. 1] Fig. 1 is a perspective view illustrating an entirety of a built-in induction cooking system according to Embodiment 1 with a partially exploded portion.
[Fig. 2] Fig. 2 is a perspective view illustrating an entirety of a main body of the built-in induction cooking system according to Embodiment 1 in a state in which a top plate has been removed.
[Fig. 3] Fig. 3 is a plan view illustrating an entirety of the main body of the built-in induction cooking system according to Embodiment 1.
[Fig. 4] Fig. 4 is a perspective view illustrating a state in which main components such as vertical partition plates of the built-in induction cooking system according to Embodiment 1 have been removed.
[Fig. 5] Fig. 5 is a longitudinal sectional view taken along the line V-V of Fig. 1.
[Fig. 6] Fig. 6 is a longitudinal sectional view taken along the line VI-VI of Fig. 1.
[Fig. 7] Fig. 7 is a perspective view of the main sections illustrating a partially cut away component case and cooking duct of a built-in induction cooking system according to Embodiment 1.
[Fig. 8] Fig. 8 is a plan view illustrating an overall arrangement of heating coils of the built-in induction cooking system according to Embodiment 1.
[Fig. 9] Fig. 9 is a plan view illustrating an induction heating source on the left side of the built-in induction cooking system according to Embodiment 1.
[Fig. 10] Fig. 10 is a wiring description of a main heating coil of the induction heating source on the left side of the built-in induction cooking system according to Embodiment 1.
[Fig. 11] Fig. 11 is an enlarged plan view of the main heating coil of the induction heating source on the left side and its peripheral area of the built-in induction cooking system according to Embodiment 1.
[Fig. 12] Fig. 12 is a plan view of a coil support of the main heating coil of the induction heating source on the left side of the built-in induction cooking system according to Embodiment 1.
[Fig. 13] Fig. 13 is a general drawing of a control circuit of the built-in induction cooking system according to Embodiment 1.
[Fig. 14] Fig. 14 is a block diagram illustrating a case in which a heating operation is performed with a pan placed above the induction heating source on the left side of the built-in induction cooking system according to Embodiment 1.
[Fig. 15] Fig. 15 is a longitudinal sectional view illustrating a case in which a heating operation is performed with a pan placed above the induction heating source on the left side of the built-in induction cooking system according to Embodiment 1.
[Fig. 16] Fig. 16 is a plan view illustrating a center front portion of a main body of the built-in induction cooking system according to Embodiment 1.
[Fig. 17] Fig. 17 is a plan view illustrating integral display means of the built-in induction cooking system according to Embodiment 1.
[Fig. 18] Fig. 18 is a plan view illustrating an exemplary display screen of the integral display means of the built-in induction cooking system according to Embodiment 1 when the left IH heat source alone is used.
[Fig. 19] Fig. 19 is an enlarged longitudinal sectional view of a main heating coil of an induction heating source on the left side and its peripheral area of an induction cooking system according to Embodiment 2.
[Fig. 20] Fig. 20 is a plan view illustrating integral display means of an induction cooking system according to Embodiment 3.
[Fig. 21] Fig. 21 is a plan view illustrating an induction heating source on the left side of an induction cooking system according to Embodiment 4.
[Fig. 22] Fig. 22 is a general plan view of an induction cooking system according to Embodiment 5.
[Fig. 23] Fig. 23 is a flowchart of the control operation of an induction cooking system according to Embodiment 6 of the invention.

### Description of Embodiments

Embodiments 1 to 5 do not show the entire invention, but show parts of the invention and/or represent background art that is useful for understanding the invention.

### Embodiment 1

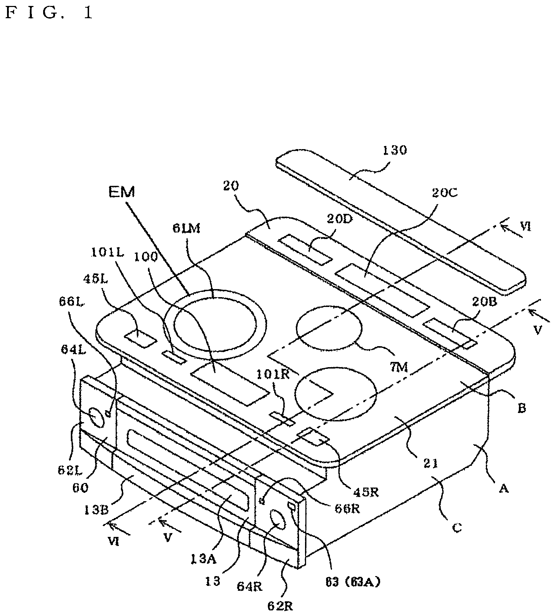

Figs. 1 to 18 illustrate an exemplary built-in (embedded) induction cooking system that is an induction cooking system according to Embodiment 1.

Fig. 1 is a perspective view illustrating an entirety of a built-in induction cooking system with a partially exploded portion.

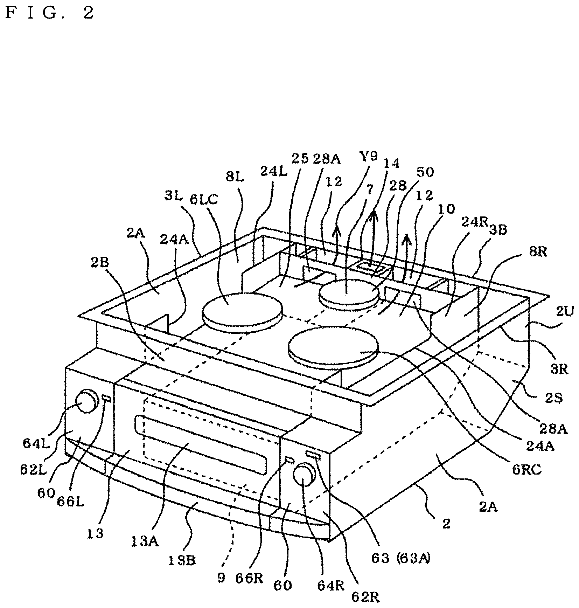

Fig. 2 is a perspective view illustrating an entirety of a main body of the induction cooking system in a state in which a top plate has been removed.

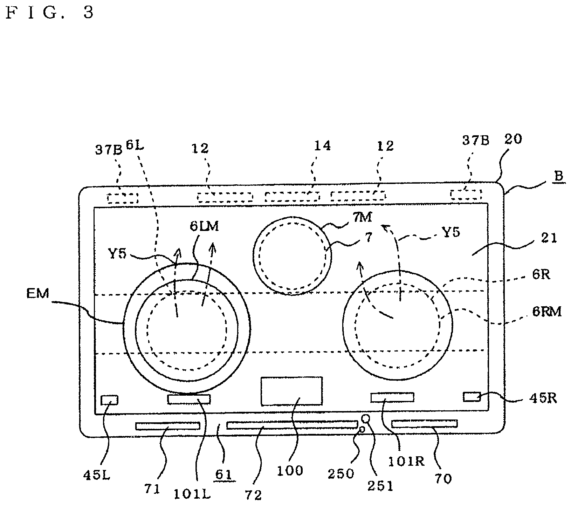

Fig. 3 is a plan view illustrating an entirety of the main body.

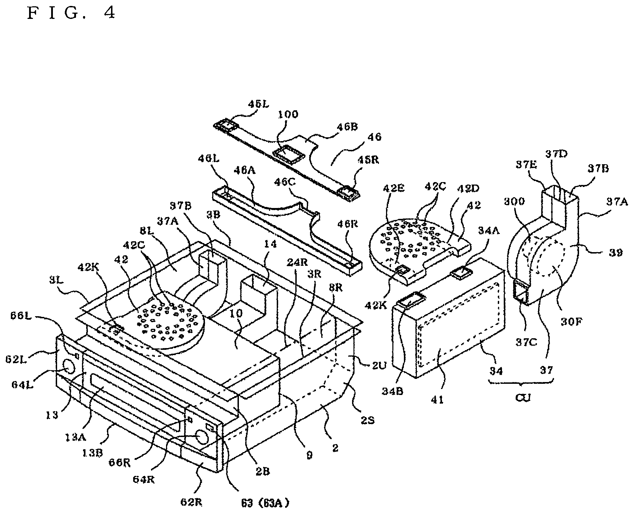

Fig. 4 is a perspective view illustrating a state in which main components such as vertical partition plates have been removed.

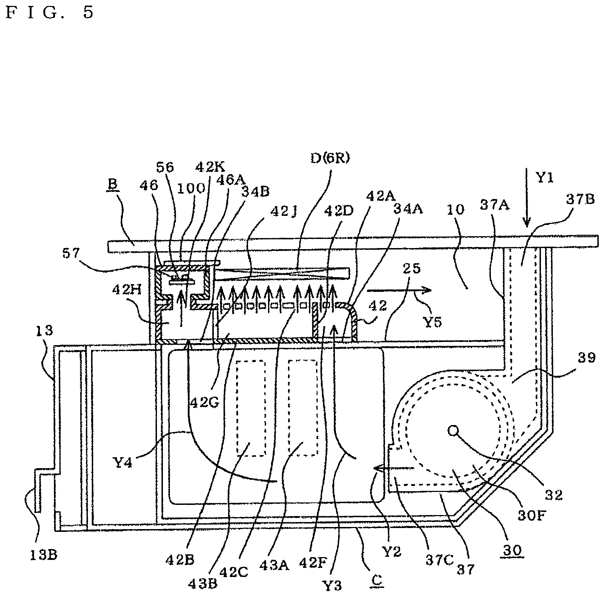

Fig. 5 is a longitudinal sectional view taken along the line V-V of Fig. 1.

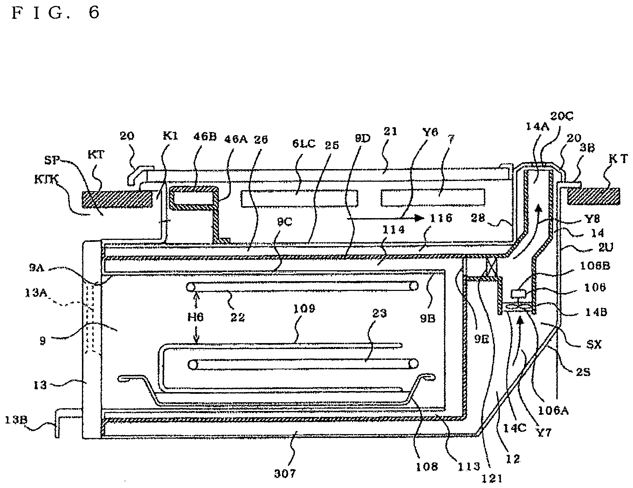

Fig. 6 is a longitudinal sectional view taken along the line VI-VI of Fig. 1.

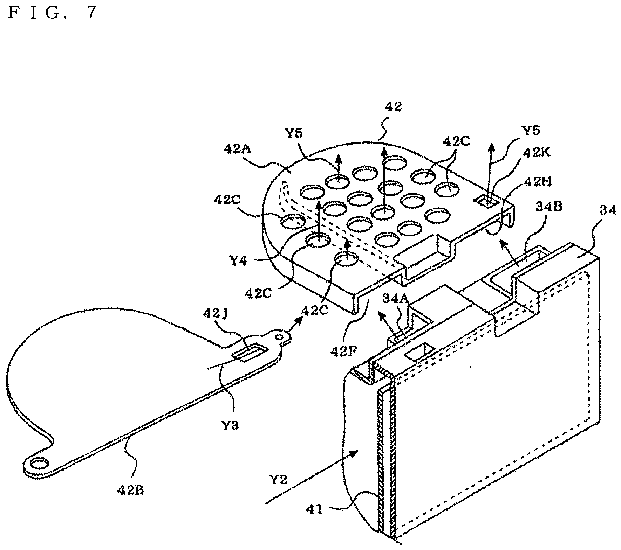

Fig. 7 is a perspective view of the main sections illustrating a partially cut away component case and cooling duct.

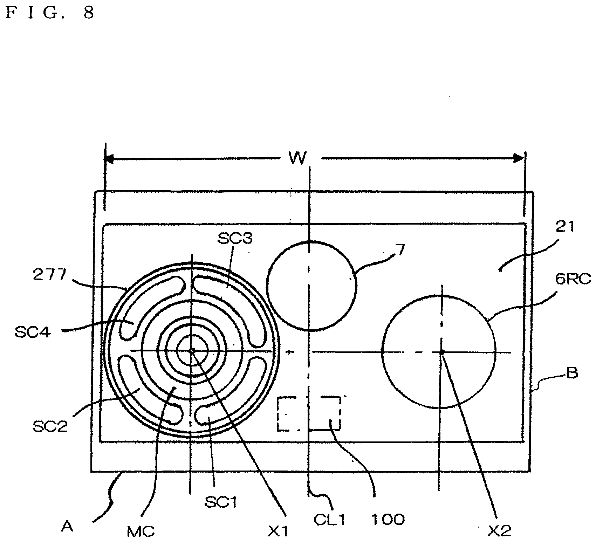

Fig. 8 is a plan view illustrating an overall arrangement of heating coils.

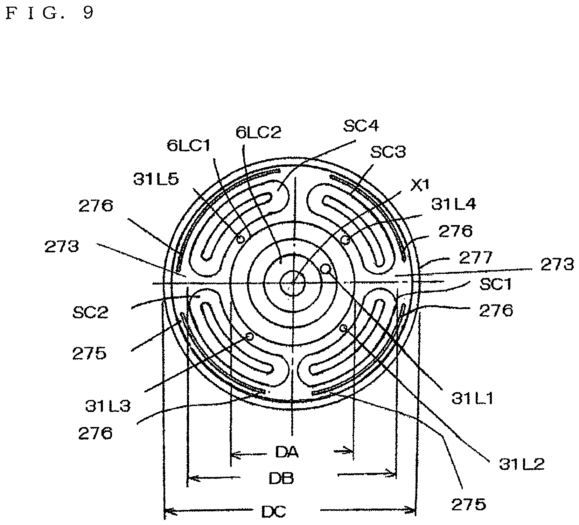

Fig. 9 is a plan view illustrating an induction heating source on the left side.

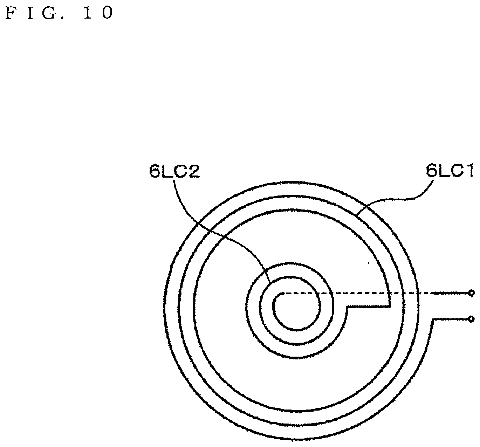

Fig. 10 is a wiring description of a main heating coil of the induction heating source on the left side.

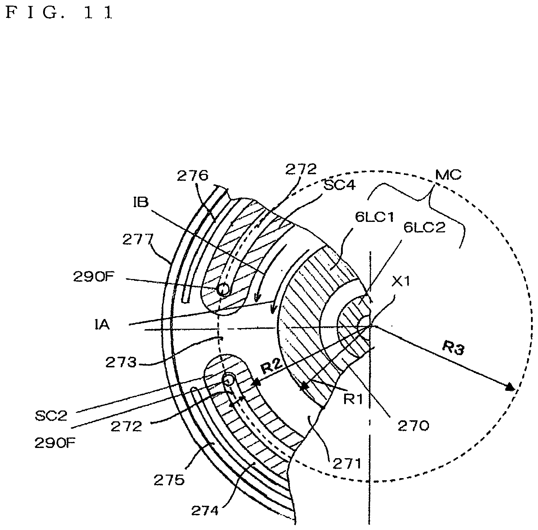

Fig. 11 is an enlarged plan view of the main heating coil of the induction heating source on the left side and its peripheral area.

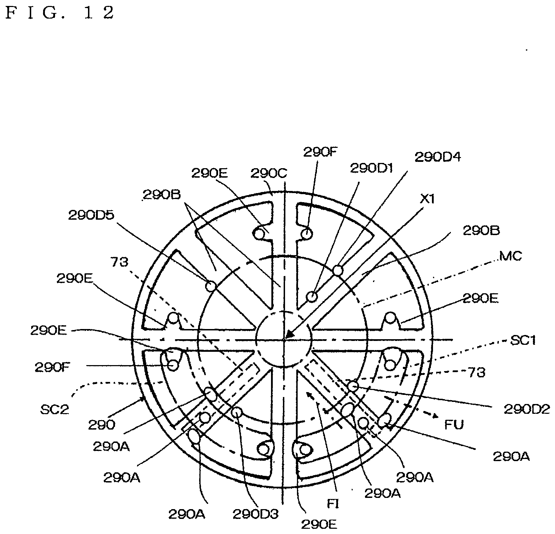

Fig. 12 is a plan view of a coil support of the main heating coil of the induction heating source on the left side.

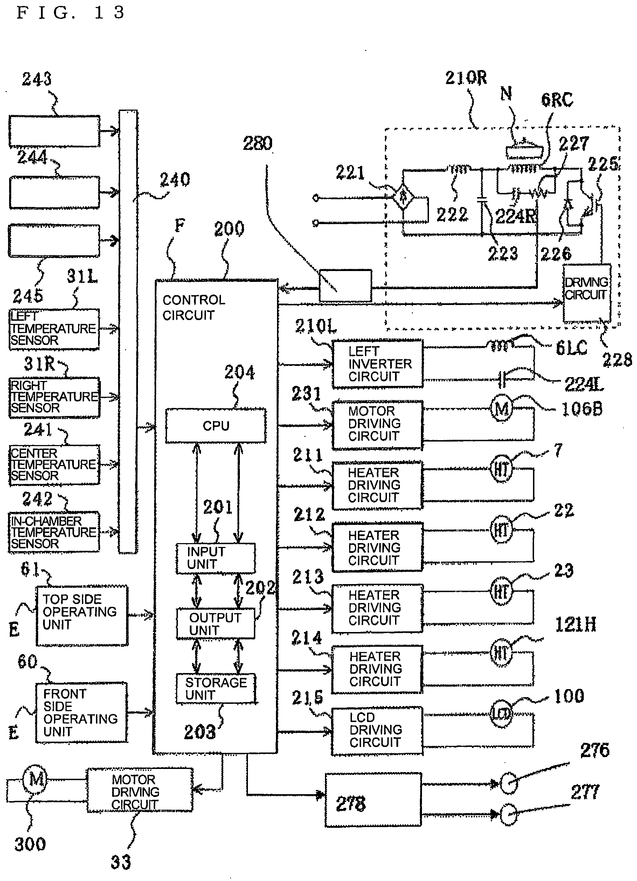

Fig. 13 is a general drawing of a control circuit.

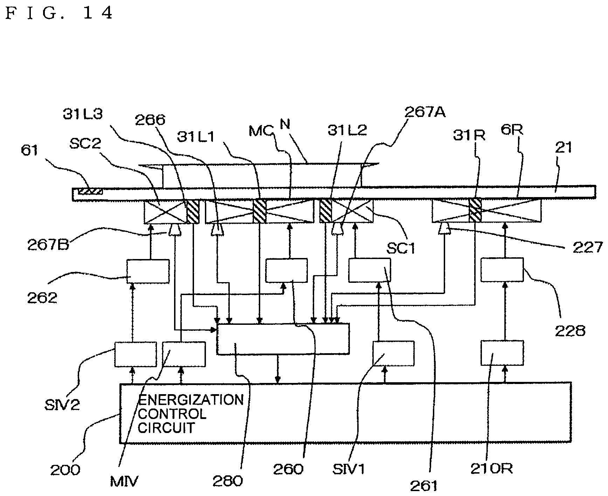

Fig. 14 is a block diagram illustrating a case in which a heating operation is performed with a pan placed above the induction heating source on the left side.

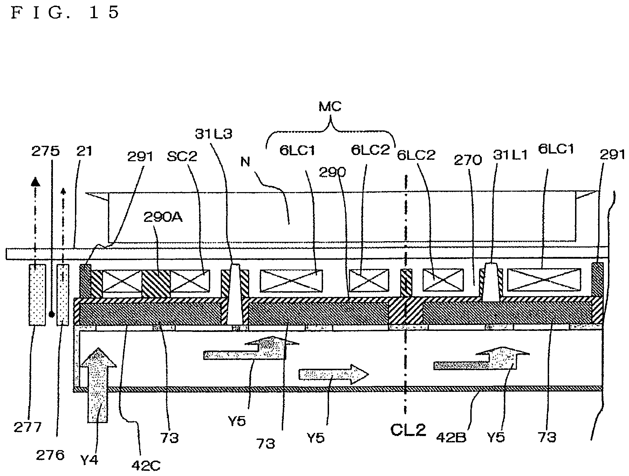

Fig. 15 is a longitudinal sectional view illustrating a case in which a heating operation is performed with a pan placed above the induction heating source on the left side.

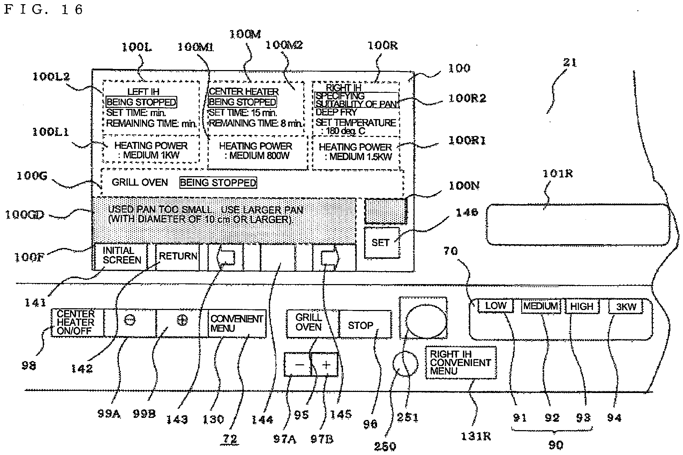

Fig. 16 is a plan view illustrating a center front portion of a main body.

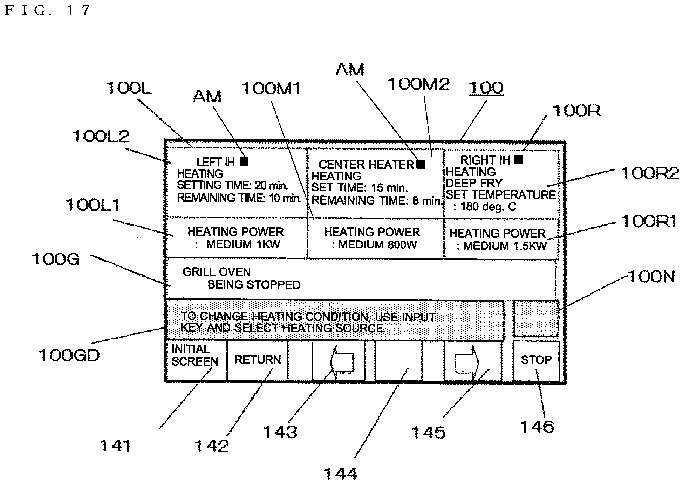

Fig. 17 is a plan view illustrating integral display means.

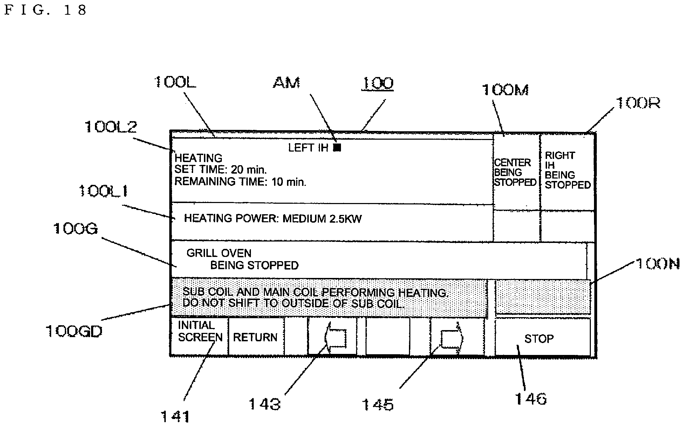

Fig. 18 is a plan view illustrating an exemplary display screen of the integral display means when the left IH heat source alone is used.
Note that in each figure, like parts or corresponding parts are designated with like reference numerals.

### (Main Body of Cooking System)

The cooking system includes a single rectangular main body A. This main body A generally includes a top plate B that constitutes a top side of the main body A, a housing C constituting a periphery (outer wall) of the main body other than the top side, heating means D that heat a pan, foodstuff, and the like with electric energy and the like, operation means E that is operated by a user, control means F that controls the heating means by receiving the signal from the operation means, and display means G that displays the operating condition of the heating means. Further, there are cooking systems that includes, as a part of the heating means D, electric heating means referred to as a grill chamber (grill heating chamber) or a roaster, as described in subsequent Embodiments.

Next, each term that will be used in Embodiments will be defined.

The "operating condition of the heating means D" is an electric and physical condition for heating and is a collective term for energization time, energization amount (heating power), heating temperature, energization pattern (continuous energization or intermittent energization), and the like. That is, it is an energization condition of the heating means D.

"Displaying" is an operation that visually informs a user of the operating condition and related information that serves as a reference while cooking (including information with the aim to alarm abnormal use and occurrence of an abnormal operating state, hereinafter, merely referred to as "cooking related information") by means of characters and symbol, illustration, whether there is color, emittance of light, or change such as luminance of emitted light. Note that when "displaying" by emitting and lighting a "wide area light emitting unit" or an "individual light emitting unit" described later, and when "display" is used in "first display" or "second display", the emitting and lighting is mere illumination of light of a predetermined color. When state of lighting and visual effect, such as color of light, brightness, and continuous lighting or blinking, are changed, it may be described as "changing" or "switching" the display.

If not specified in particular, the "display means" includes a liquid crystal display (LCD), various light-emitting devices (a semiconductor light-emitting element has, for example, two types, that is, light emitting diode (LED) and laser diode (LD)), organic electro luminescence (Electro Luminescence: EL) element, or the like. Accordingly, the display means includes display screens such as a liquid crystal screen or an EL screen. However, the display means such as the "wide area light emitting unit" and the "individual light emitting unit" described below may be mere light emitting means such as a lamp or an LED. Also, "IH", such as in a right IH heating unit, stands for induction heating.

"Notifying" is an operation notifying the user with the object to make the user recognize the operating condition of the control means and the cooking related information by display or electrical speech (speech electrically created or synthesized).

If not specified in particular, "notifying means" includes notifying means with audible sound such as a buzzer, a speaker, or the like and notifying means with characters and symbol, illustration, or visible light.

"Cooperative heating" is an operation that heats the same single heated object by induction by supplying electric power to each of the two or more induction heating sources. In the Embodiment, cooperative heating is carried out by a main heating coil and a single or a plurality of sub heating coils, which will be described later. Note that when a plurality of heating coils are arranged close to each other, it is preferable to apply current in the same direction so that alternating-current magnetic fields formed by each of the heating coils do not interfere with each other. However, the Embodiment is not limited to this.

### (Main body A)

As shown in Fig. 1, "A" is the main body in which the top side is entirely covered with a top plate B that will be described later. The external shape of this main body A is formed with a size that will cover the installation opening K1 formed in the kitchen furniture KT (see Fig. 6) such as a sink cabinet and with a predetermined size that matches the space, and is formed into an approximate square or a rectangle.

"2" is a main body case forming the outer walls of the housing C and is constituted by a body 2A that is formed by folding a sheet of flat-shaped metal sheet a plurality of times with a press machine and a front flange plate 2B made of a metal sheet that is connected to the edge portion of this body by welding or by fixing means such as a rivet, screw or the like. In a state in which the front flange plate 2B is connected to the body 2A by the fixing means, the main-body case 2 is boxed shaped with an opened top side. The bottom portion on the rear side of this boxed shaped body 2A is an inclined portion 2S and above this is a vertical rear side wall 2U.

Three portions, that is, a rear edge, a right edge, and a left edge of the top side opening of the main body case 2 are each integrally bent outwards into an L-shape so as to form a flange. "3B" is the flange at the rear edge, "3L" is the flange on the left side, and "3R" is the flange on the right side. These three flanges 3B, 3L, and 3R and the front flange plate 2B are placed on the top side of the installation portion of the kitchen furniture KT (see Fig. 6) and support the load of the cooking system.

Further, when the cooking system is in a state completely housed in the installation opening K1 of the kitchen furniture KT, the front side of the cooking system is exposed from the opening KTK that is formed in the front of the kitchen furniture KT, enabling the front side (left and right) operation units 60 (see Fig. 2) of the cooking system to be operable from the front side of the kitchen furniture.

"2S" is an inclined portion that connects the rear side and the bottom side of the body 2A (see Fig. 6), and is cut so that it will not clash into and interfere with the rear edge portion of the installation opening K1 of the kitchen furniture KT when the cooking system is fitted and installed into the kitchen furniture KT. That is, when fitting and installing this type of cooking system into the kitchen furniture KT, the front side of the main body A of the cooking system is inclined downwards and, in this state, the front side is first lowered into the installation opening K1 of the kitchen furniture KT. Then, afterwards, the rear side is lowered into the installation opening K1 in an arc (such an installation method is disclosed in detail in Japanese Unexamined Patent Application Publication No. 11-121155, for example). Due to such an installation method, the front flange plate 2B is sized so that a sufficient space SP is secured between an installation-opening front edge (see Fig. 6) of the installation opening K1 of the kitchen furniture KT when the cooking system is installed in the kitchen furniture KT.

The main body case 2 includes therein heat sources 6L and 6R for induction heating an heated object N such as a pan (hereinafter may be referred to as merely a "pan") that is made of metal, for example, that has a magnetic property, in which the pan is placed on a top plate 21 described later; a radiant type central electric heat source 7, such as one referred to as a radiant heater, which is an electric heater heating with radiant heat; the control means F described later that controls a cooking condition of the heating means; the operation means E described later that inputs the cooking condition to the control means; and the display means G that displays the operation condition of the heating means that has been input by the operation means. Each will be described in detail below.

The housing C is partitionally formed therein with, in a broadly divided manner, a right side cooling chamber 8R that longitudinally extends in the front-rear direction, a left cooling chamber 8L that longitudinally extends in the front-rear direction in the same manner, a box-shaped grill (or a roaster) heating chamber 9, upper portion component chamber 10, and a rear portion exhaust hood 12. Note that each chamber is not completely isolated from each other. For example, the right cooling chamber 8R and the left cooling chamber 8L are each in communication with the rear exhaust hoods 12 through the upper portion component chamber 10.

The grill heating chamber 9 is a substantially independent enclosed space when its front opening 9A is closed by the door 13 described later. The grill heating chamber is in communication with the external space of the housing C, that is, indoor space such as a kitchen, through the exhaust duct 14 (see Fig. 6).

### (Top Plate B)

As described later, the top plate B is constituted by two large parts, namely, an upper frame (also known as frame body) 20 and the top plate (also known as upper plate, top glass, top) 21. The entire upper frame 20 is formed into a picture frame shape with a metal sheet such as a nonmagnetic stainless steel sheet or aluminum plate and has a size that covers the top side opening of the main body case 2 (see Figs. 3 and 6).

The top plate 21 has a breadth W that completely covers a large opening provided in the center of the picture frame shaped upper frame 20 without any gap and is superimposed and installed above the main body case 2. This entire top plate 21 is composed of a transparent or a semitransparent material, such as a heat-resistant tempered glass, glass ceramics, and the like, that transmits infrared light and visible ray of LED and is formed in a rectangular or square shape so as to match the shape of the opening portion of the upper frame 20. Note that when transparent, the user will see all of the internal components from above the top plate 21 and this may degrade the look. Accordingly, there are cases in which paint for shielding is applied or printing of small dots or a grid that does not transmit visible rays is performed on the surface or the back of the top plate 21.

Further, the front, rear, left, and right rims of the top plate 21 are fixed to the opening portion of the upper frame 20 in a water tight state with a rubber packing or a seal material (not shown) therebetween. Accordingly, water droplets are prevented from penetrating from the top side of the top plate 21 through the gap formed between the facing upper frame 20 and top plate 21 into the interior of the main body A.

"20B" in Fig. 1 is a right vent hole formed by stamping at the same time as the forming of the upper frame 20 with the press machine and is an intake passage of the fan 30. "20C" is a center vent hole similarly formed by stamping when forming the upper frame 20 and "20D" is a left vent hole similarly formed by stamping when forming the upper frame 20. Note that in Fig. 1, although only the rear portion of the upper frame is illustrated, as seen from above as in Fig. 3, the upper frame covers the entire top side of the main body case 2 in a picture frame manner.

During the actual cooking stage, there are cases in which the top plate 21 becomes 300 degrees C or higher by receiving heat from the heated object N such as a pan that has been heated to high temperature by induction heating with the right side induction heating source (hereinafter, referred to as "right IH heat source") 6R and/or the left side induction heating source (hereinafter, referred to as "left IH heat source") which will be described in detail later. Further, if a radiant type central electric heat source 7 that is a radiant type electric heater described later is provided on the rear side of the top plate 21, there are cases in which the top plate 21 is directly heated to a high temperature by the heat from the radiant type central electric heat source 7 to a temperature of 350 degrees C or higher.

On the top side of the top plate 21, as shown in Figs. 1 and 3, circular guide marks 6RM, 6LM, and 7M each indicating rough positions of the corresponding later described right IH heat source 6R, left IH heat source 6L, and the radiant type central electric heat source 7 are displayed by means of printing and the like.

### (Heating Means D)

The heating means D of Embodiment 1 includes the right IH heat source 6R that is arranged in the front portion on the right side of the main body A; the left IH heat source 6L that is on the other side, that is, on the left side; the radiant type central electric heat source 7 that is arranged in the rear portion along a line that is the middle of the left and right of the main body A; and a pair of upper and lower radiant type electric heat sources 22 and 23 for the roster in the grill heating chamber 9. These heat sources are configured such that each energization is controlled independently by the control means F. Details will be described subsequently with reference to the drawings.

### (Right IH Heat Source)

The right IH heat source 6R is disposed inside the upper portion component chamber 10 that is partitionally formed in the main body case 2. Additionally, a right IH heating coil 6RC is disposed on the bottom side of the top plate 21 on the right side. The top edge portion of this coil is adjacent to the bottom side of the top plate 21 with a minute gap therebetween, thus serving as an IH (induction) heat source. In Embodiment 1, one with a capacity in which the maximum electric power consumption (maximum heating power) is 3 kW is used, for example. The right IH heating coil 6RC is ultimately formed into a disc shape by coiling about 30 fine wires of approximately 0.1 mm to 0.3 mm, twisting one or a plurality of this coil (hereinafter, referred to as "assembled wire"), and spirally winding this so that a circular outer shape is formed. The diameter (the maximum outer diameter) of the right IH heating coil 6RC is approximately 180 mm.

The position of the guide mark 6RM that is a circle (a solid line in Fig. 1 and 3) displayed on the top plate 21 does not completely match the position of the outermost circumference of the right IH heating coil 6RC of the right IH heat source 6R. The guide mark 6RM indicates a proper induction heating region. The broken line in Fig. 3 shows an approximate position of the outermost circumference of the right IH heating coil 6RC.

### (Left IH Heat Source)

The left IH heat source 6L is disposed at a position symmetric to the right IH heat source 6R with respect to a left-right center line CL1 (see Fig. 8) of the main body A and has a similar configuration as that of the right IH heat source 6R. In Embodiment 1, one with a capacity in which the maximum electric power consumption (maximum heating power) is 3 kW is used, for example. Further, as shown in Fig. 11, the left IH heating coil 6LC has a circular outer shape with a radius R with respect to a center point X1 as a cardinal point and its diameter (maximum outer diameter) is approximately 180 mm. However, this dimension is one that does not include sub heating coils SC described later and is a maximum outer diameter of an outer coil 6LC1 among the outer coil 6LC1 and inner 6LC2 described later that constitutes the left IH heating coil. This corresponds to DA in Fig. 9. In order to distinguish between the sub coils SC described later, the outer coil 6LC1 and the inner 6LC2 that constitute the left IH heating coil 6LC may both be referred to as a "main heating coil MC".

The position of the guide mark 6LM that is a circle (a solid line in Fig. 1 and 3) displayed on the top plate 21 does not completely match the position of the outermost circumference of the left IH heating coil 6LC. The guide mark indicates a proper induction heating region. The broken line in Fig. 3 shows an approximate position of the outermost circumference of the left IH heating coil 6LC.

"EM" is a circular guide mark displayed on the top plate 21. This mark indicates a large circular area (hereinafter, referred to as a "cooperative heating area mark") that covers the below-described main heating coil MC and all of the sub heating coils SC (four in total) arranged with substantially equal gaps in the front, back, left, and right position of the main heating coil MC. Further the position of this cooperative heating area mark EM almost conforms to the "wide area light emitting unit" described later that radiates light from below the top plate to indicate the outer limit of the preferable placing position of the heated object when cooperatively heating with the main heating coil MC and the sub heating coils SC.

In a similar manner to the right IH heating coil 6RC, an infrared temperature detecting element (hereinafter, referred to as infrared sensor) 31L is disposed in a space in the left IH heating coil 6LC (see Figs. 14 and 15). Details will be described later.

The IH heating coil 6LC of the left IH heat source 6 is constituted by two coils divided in the radius direction (hereinafter, the outside coil is referred to as "outer coil" 6LC1 and the inside coil as "inner coil" 6LC2). These two coils are a sequential unit connected in series. Note that the whole unit may be a single coil rather than two coils.

On the bottom sides (back side) of the left and right IH heating coils 6LC and 6RC, bars are disposed having a rectangular cross section formed of a high magnetic induction material, such as ferrite, as a magnetic flux leakage prevention material 73 of each heating coils. For example, the left IH heating coil 6LC is radially disposed from the center portion X1 with 4, 6, or 8 of the above materials (the number does not have to be an even number).

That is, the magnetic flux leakage prevention material 73 does not have to cover the entire bottom side of each of the left and right IH heating coils 6LC and 6RC. The magnetic flux leakage prevention materials 73 each formed in a rod shape having a square or a rectangular cross section may be disposed in a predetermined interval so as to cross the coil wire of the right IH heating coil 6RC. Accordingly, in Embodiment 1, the material in plural number is radially provided from the center portion X1 of the left IH heating coil. With the magnetic flux leakage prevention materials 73 as above, it will be possible to concentrate the magnetic line of force generated from the IH heating coil to the heated object N on the top plate 21.

The right IH heating coil 6RC and the left IH heating coil 6RC may each be divided into multiple parts that can be separately energized. For example, an IH heating coil may be spirally wound in the inside and a separate IH heating coil that is concentric and flush with the coil and that is spirally wound having a large diameter may be disposed in the outside, and the heated object N may be heated by three energization patterns, that is, energizing the inside IH heating coil, energizing the outside IH heating coil, and energizing both the inside and outside IH heating coils.

As described above, the heated object N from small ones to large ones (large diameter) may be efficiently heated by using at least one or by a combination of the output level, duty ratio, and output interval of the high-frequency power that is made to flow to the two IH heating coils (as representative technical literature in which a plurality of heating coils are allowed to be energized separately, Japanese Patent No. 2978069 is known).

"31R" is an infrared temperature detecting element that is disposed in a space provided in the center portion of the right IH heating coil 6RC and has, on the top end portion, an infrared light receiving unit facing the bottom side of the top plate 5.
In a similar manner, the left IH heating coil 6LC is disposed with an infrared temperature detecting element 31L in a space provided in its center portion (see Figs. 9 and 15). Details will be described later.

The infrared temperature detecting elements 31R and 31L (hereinafter, referred to as "infrared sensor") are each constituted by, for example, a photodiode that can measure a temperature by detecting the dose of infrared radiation from the heated object such as a pan. Note that the above temperature detecting element may be a detector element based on heat transfer such as a thermister temperature senor.

As above, prompt detection of infrared radiated in accordance with the temperature of the heated object by means of an infrared sensor from below the top plate 5 is known in Japanese Unexamined Patent Application Publication No. 2004-953144 (Japanese Patent No. 3975865), Japanese Unexamined Patent Application Publication No. 2006-310115, and Japanese Unexamined Patent Application Publication No. 2007-18787, for example.

When the temperature detecting element 31R is an infrared sensor, infrared radiated from the heated object N can be integrated and can be received at real time (with almost no time lag) allowing the temperature be detected from the dose of infrared. Accordingly, the infrared sensor is superior (more than the thermister type). Even when the temperature of the top plate 21, such as a heat-resisting glass or one made of ceramics that is positioned in front of the heated object N, is not the same as the temperature of the heated object N, and irrespective of the temperature of the top plate 21, this temperature sensor is capable of detecting the temperature of the heated object. This is because the top plate 21 is devised so that infrared radiated from the heated object is not absorbed or blocked by the top plate.

For example, the top plate 21 has been selected with a material that transmits infrared in the wavelength region under 4.0 µm or under 2.5 µm while the temperature sensor 31R is selected with one that detects infrared in the wavelength region under 4.0 µm or under 2.5 µm.

On the other hand, when the temperature detecting element 31R is a heat transfer type such as a thermister, compared to the above-described infrared temperature sensor, although it is inferior in detecting a sudden temperature change in real time, it can surely detect the temperature of the bottom portion of the heated object N or the temperature of the top plate 21 under the heated object by receiving radiant heat from the top plate 21 or the heated object. Further, it can detect the temperature of the top plate 21 when there is no heated object N.

Note that when the temperature detecting element is a heat transfer type such as a thermister, the temperature sensing unit may be in contact with the bottom side of the top plate 21 or may have a thermally conductive resin therebetween such that the temperature of the top plate 21 itself is accurately understood to the extent possible. This is because if there is a gap between the temperature sensing unit and the bottom side of the top plate 21, there will be a delay in temperature propagation.

In the subsequent description, there are cases in which the "left, right" in the names and the "L, R" in the reference signs are omitted in parts that are disposed commonly to the left and right and sharing the same details.

### [Radiant Type Central Electric Heat Source]

"7" is a radiant type central electric heat source (see Figs. 2 and 3) and is arranged in a position that is inside the main body A, on the left-right center line CL1 of the top plate 21 and at the rear portion side of the top plate 21. The radiant type central electric heat source 7 employs an electric heater (for example, a nichrome wire heater, a halogen heater, or a radiant heater) that heats by radiation and heats the heated object such as a pan through the top plate 21 from under. Further, one with a capacity in which the maximum electric power consumption (maximum heating power) is 1.2 kW is used, for example.

The radiant type central electric heat source 7 has a round vessel shape with the entire top side opened and a vessel-shaped cover 50 made of a heat insulating material constituting the outermost circumference that has a maximum outer diameter of approximately 180 mm and a height (thickness) of 15 mm.

The position of the guide mark 7M that is a circle (a solid line in Fig. 1 and 3) displayed on the top plate 21 does not completely match the position of the outermost circumference of the radiant type central electric heat source 7. The guide mark indicates a proper heating region. The broken line circle of Fig. 3 indicates an approximate outermost circumference of the cover 50 of the radiant type central electric heat source 7.

### [Radiant Type Electric Heat Source]

"24R" is a vertical partition plate on the right side that is disposed vertically (see Figs. 2 and 4) and serves as a partition wall isolating the right side cooling chamber 8R and the grill heating chamber 9 that are in the housing C. "24L" is a vertical partition plate similarly on the left side and serves as a partition wall isolating the left cooling chamber 8L and the grill heating chamber 9 that are in the housing C (see Figs. 2 and 4). Note that the vertical partition plates 24R and 24L are disposed such that spaces of a few millimeters are kept with the outside walls of the grill heating chamber 9.

"25" is a horizontal partition plate (see Figs. 2 and 5) and has a size dividing the whole space between the left and right vertical partition plates 24L and 24R into upper and lower two spaces. The upper portion of this partition plate is the upper portion component chamber 10. Further, this horizontal partition plate is disposed with a preset space 116 of a few millimeters to 10 millimeters with the ceiling wall of the grill heating chamber 9 (see Fig. 6).

"24A" is a notch formed in each of the left and right vertical partition plates 24L and 24R and is provided so that the vertical partition plates do not clash into a cooling duct 42 that is being installed horizontally, which will be described later.

The grill heating chamber 9, which is formed in a rectangular box shape, is formed with a metal sheet such as a stainless steel sheet or steel sheet on the left and right, top and bottom, and back side and is disposed with radiant type electric heaters on the upper ceiling and the bottom, such as a sheath heater which is a set of upper and lower radiant type electric heat sources 22 and 23 (see Fig. 6) extending substantially horizontally. Here, "extended" refers to a state in which the sheath heater is bent midway a plural number of times in a horizontal plane so as to planarly meander an area as wide as possible. A typical example is one with a W-shape planarly.

These two upper and lower radiant type electric heat sources 22 and 23 are energized at the same time or individually so that roasting (roast fish, for example), grilling (pizza and gratin, for example), and oven cooking (cake and roasted vegetables, for example) that cooks by setting the ambient temperature in the grill heating chamber 9 can be performed. As the radiant type electric heat source 22 that is disposed on the upper ceiling of the grill heating chamber 9, one with a maximum electric power consumption (maximum heating power) of 1200 W is used and as the radiant type electric heat source 23 that is disposed in the bottom, one with a maximum electric power consumption (maximum heating power) of 800 W is used.

"26" is a space formed between the horizontal partition plate 25 and the grill heating chamber 9 (same as the above-mentioned space 116) and is ultimately in communication with the rear exhaust hoods 12. Air in the space 26 is discharged by being induced outside the main body A through the rear exhaust hoods 12.

Referring to Fig. 2, "28" is a rear partition plate that partitions the upper portion component chamber 10 and the rear exhaust hoods 12 and that has a height such that the lower end of the rear partition plate reaches the horizontal partition plate 25 and the upper end thereof reaches the upper frame 20. "28A" are outlets formed at two places in the rear partition plate 28 and are for discharging the cooling air that has entered the upper portion component chamber 10 (see Fig. 2).

### (Cooling Fan)

The fan 30 in Embodiment 1 employs a multi-blade centrifugal fan (sirocco fan is typically known) (see Figs. 4 and 5) in which blades 30F are fixed to the end of a rotation shaft 32 of a drive motor 300. Further, the fan 30 is each disposed in the right side cooling chamber 8R and the left cooling chamber 8L and cools the circuit board for the left and right left IH heating coils 6LC and 6RC and the heating coils themselves. Details will be described later.

"CU" is, as shown in Figs. 4 and 5, a cooling unit that is inserted from above into each of the cooling chambers 8R and 8L and fixed therein, and includes a component case 34 that accommodates the circuit board 41 constituting an inverter circuit and a fan case 37 that is connected to the component case and that forms a fan chamber 39 of the fan 30 therein. The fan 30 is a so called horizontal shaft type, in which the rotation shaft 32 of the drive motor 300 is oriented horizontally, and is accommodated inside the fan case 37 disposed in the right side cooling chamber 8R. In the fan case 37, a round shape fan space is formed surrounding the multiple blades 30F of the fan 30, thus forming the fan chamber 39. "37A" is a suction tube of the fan case 37 and a suction 37B is formed on the uppermost portion. "37C" is an outlet formed on one end of the fan case 37.

The fan case 37 is formed as an integral structure by combining two plastic cases 37D and 37E and coupling them with a fixture such as a screw. In this coupled state, the case is inserted into each of the cooling spaces 8R and 8L from above and is fixed so as not to move with an appropriate fixing means.

The component case 34 is connected to the fan case 37 in an adhered manner so that cooling air discharged from the outlet 37C for discharging air of the fan case 37 is introduced into the component case 34. The component case 34 has a horizontally long rectangle shape and the entire case is sealed except for the three portions, namely, an introduction port (not shown) of the outlet 37C, and a first outlet 34A and a second outlet 34B that are described later.

"41" is a printed circuit board (hereinafter, referred to as a "circuit board") that is mounted with an inverter circuit, in which the circuit board each provides a predetermined high-frequency power to each of the right IH heat source 6R and left IH heat source 6L. The circuit board has external dimensions that substantially matches the shape of the internal space of the component case 34 and is disposed in the component case 34 on the far side relative to the grill heating chamber 9, in other words on the side that becomes close as a few millimeters or less to the main body case 2 constituting the outer wall of the main body A. Note that in this circuit board 41, a power source and a control circuit for driving the drive motor 300 of the fan 30 are also mounted separate to the inverter circuit.

Each of the inverter circuits 210R and 210L of this circuit board 41 is, as shown in Fig. 13, a circuit equipped with, excluding a rectifier bridge circuit 221 whose input side is connected to a bus-line of an commercial power supply (although may be included), a direct current circuit that includes a coil 222 connected to a DC side output terminal and a smoothing capacitor 223, a resonant capacitor 224, an IGBT 225 that is an electric power controlling semiconductor serving as switching means, a driving circuit 228, and a flywheel diode. The inverter circuits do not include the IH heating coils 6RC and 6LC that are mechanical structures.

On the top side of the component case 34, the first outlet 34A and the second outlet 34B is formed with a distance in between along the flow direction of the cooling air from the fan 30. The second outlet 34B is arranged in a position on the most downstream side of the cooling air in the component case 34 and has an opening area few times larger than that of the first outlet 34A. Note that in Fig. 5, Y1 to Y5 indicates the flow of air sucked into and discharged from the fan 30, and the cooling air flows in the order of Y1, Y2..., and Y3.

"42" is a plastic molded cooling duct in which three ventilation spaces 42F, 42G, and 42H that are described later are formed inside a space between a screwably fixed upper case 42A, which is an integrally formed plastic part, and a tabular cover, which is also an integrally formed plastic part, (hereinafter, referred to as "lower case") 42B (see Fig. 5).

"42C" are blow out holes formed in plural numbers penetrating through the whole area of the wall of the upper side of the upper case 42A. The holes are formed to blow out cooling air from the fan 30 and each bore of the blow out holes 42C is made the same.

"42D" is a partition wall with a straight or curved rib (convex shaped) shape integrally formed in the upper case 42A, and with this wall, a ventilation space 42F is partitionally formed in communication with one end of the outlet 34A of the component case 34.

In a similar manner, "42E" is a U-shaped, when in planar view, and convex shaped partition wall integrally formed in the upper case 42A, and with this wall, a ventilation space 42H is partitionally formed in communication with one end of the outlet 34A of the component case 34. This ventilation space 42H is in communication with the most large ventilation space 42G through a communication hole (aperture) 42J formed on one side of the partition wall 42E (the side that is close to the component case 34 in Figs. 4 and 7).

Further, the cooling duct 42 is disposed so that one side of the ventilation space 42H (the side that is close to the component case 34 in Figs. 4 and 7) is directly above the second outlet 34B of the component case 34. With the above, the cooling air that is discharged from the component case 34 enters the ventilation space 42H of the cooling duct 42, is fanned out into the ventilation space 42G therefrom, and is blown out from each of the blow out holes 42C. "42K" is a square shaped vent hole formed so as to correspond to the ventilation space 42H of the upper case 42A, and this vent hole blows out air that cools the liquid crystal display screens 45R and 45L described later.

Referring to Fig. 5, "43A" and "43B" are each aluminum radiation fins to which an electric power controlling semiconductor switching element such as IGBT 225 and other heat generating parts that are in the circuit board 41--in which the circuit board is each mounted with an inverter circuit (that will be described in detail will Fig. 13) 210R for the right IH heat source 6R and with an inverter circuit 210L for the left IH heat source 6L --are attached. 43A and 43B are arrangements of orderly formed thin fins in plural number that is formed throughout the entirely thereof. As shown in Fig. 5, this radiation fins are disposed on the side that is close to the ceiling portion of the component case 34 and are provided below with sufficient space so that cooling air Y4 flows in the space.

That is, since the characteristics of the fan 30 is such that the discharge capacity (blow out capacity) of the discharge port (outlet 37C) is not uniform throughout the area of the discharge port and that the portion with maximum discharge capacity is on the lower side of the vertically center point of the outlet 37C, the positions of the radiation fins 43A and 43B are set on the upper side so that they are not positioned on the extended line of the vertically center point of the outlet 37C. Further, cooling air is not blown towards various small electronic components and the printed wiring pattern mounted on the surface of the circuit board 41.

The inverter circuit 210L for the left IH heat source 6L is constituted by a dedicated inverter circuit MIV for driving the main heating coil MC and dedicated inverter circuits SIV1 to SIV 4 for driving the plurality of sub heating coils SC individually.

The grill heating chamber 9 is equipped under the left and right IH heat source 6L and 6R of the main body A and forms a predetermined space SX (see Fig. 6) with the inside rear wall of the main body A. That is, the space SX is formed between the rear side wall 2U of the body of the main body case 2 for installing the exhaust duct 14 described later and in order to form the exhaust hood 12.

In a state in which the two independent cooling units CU are inserted into the cooling chamber 8R and 8L from above and are fixed therein, each portion of the large width fan case 37 partially projects out into the space X and a predetermined space is formed between the left and right side walls of the grill heating chamber 9 and the corresponding component case 34 that houses the circuit board 41. Note that, here, the description space refers to a space with the left and right outer wall of the grill heating chamber 9 and does not refer to the gap between each of the facing vertical partition plates 24L and 24R and the outer surface of the corresponding component case 34 described in Embodiment 1.

Even if there is a grill heating chamber 9, the fan case 37 portion of the cooling unit CU is disposed in the space SX as above. When projected and viewed from the front, a portion of the fan case 37 of the cooling unit CU is in a partially overlapped state with the grill heating chamber 9, and, thus, preventing the increase in the width of the main body A.

### (Operation Means E)

The operation means E of the cooking system according to Embodiment 1 includes front side operating units 60 and a top side operating unit 61 (see Figs. 2 to 3).

### (Front Side Operating Units)

Plastic front side operating frames 62R and 62L are mounted on the respective left and right sides of the main body case 2, and the front sides of the operating frames includes front side operating units 60. The front side operating unit 60 is provided with an operation button 63A (see Fig. 2) of the main power switch 63 that simultaneously provides or shuts off all of the power to the left IH heat source 6L, the right IH heat source 6R, the radiant type central electric heat source 7 and the radiant type electric heat sources 22 and 23 of the grill heating chamber 9. Each of a right operation dial 64R that opens and closes an electric contact of a right power switch (not shown) that controls the energization and amount of energization (heating power) of the right IH heat source 6R and, similarly, a left operation dial 64L of a left control switch (not shown) that controls the energization and amount of energization (heating power) of the left IH heat source 6L is provided to the corresponding front side operating unit 60. Power is supplied to all of the electric circuit components shown in Fig. 13 via the main power switch 63.

In the corresponding front side operating unit 60, a left indicating lamp 66L is provided that lights on only when energization is performed to the left IH heat source 6L by a left operation dial 64L and a right indicating lamp 66R is provided that lights on only when energization is performed to the right IH heat source 6R by a right operation dial 64R.

Note that the left operation dial 64L and the right operation dial 64R are, as shown in Figs. 1 and 4, pushed inside so as not to protrude from the front surface of the front side operating unit 60 when not in use. When using the dial, the user pushes the dial once with a finger and releases the finger therefrom. With this, the dial protrudes out (see Fig. 2) by force of a spring (not shown) embedded in the front side operating frame 62, turning the dial into a rotatable state by pinching the circumference of the dial. Further, at this stage, when turned to the left or right a notch, energization (at a minimum set heating power of 120W) is started in each of the left IH heat source 6L and the right IH heat source 6R. Note that the minimum heating power of the left IH heat source 6L is obtained only by the main heating coil MC, and the sub heating coils SC are not heated and driven when heating power is set to minimum.

Additionally, when either of the protruded left operation dial 64L and right operation dial 64R is further turned to the same direction, a predetermined electric pulse is generated by an embedded rotary encoder (not shown) in accordance to the rotation amount. The electric pulse is read by the control means F and, thus, the amount of energization of the corresponding heat source is determined enabling setting of the heating power. Note that when either of the left operation dial 64L and the right operation dial 64R is, with the finger of the user, pushed (pushed back) once into a predetermined position where the dial does not protrude out from the front surface of the front side operating unit 10, irrespective of whether in the initial state or in a state in which the dial has been turned to the right or left at some stage, the dial is kept at this position and the energization of the left IH heat source 6L or the right IH heat source 6R can be instantaneously stopped (for example, even during cooking, when the right operation dial 64R is pushed in, energization of the right IH heat source 6R will be instantaneously stopped.)

Note that when opening (OFF) operation is performed by the operation button 63A of the main power switch 63 (see Fig. 1), the operation of the right operation dial 64R and the left operation dial 64L will be made invalid all at once thereafter. Similarly, all energization of the radiant type central electric heat source 7 and the radiant type electric heat sources 22 and 23 disposed in the grill heating chamber 9 will also be shut off.

Further, although not shown, there are three independent timer dials provided on the bottom portion of the front side of the front side operating frame 62. These timer dials are for controlling timer switches (also known as a timer counter, not shown) that energizes either one of the corresponding left IH heat source 6L, right IH heat source 6R, and radiant type central electric heat source 7 for a desired time (set timer time) from the start of energization and automatically shut off power after the set time has elapsed.

### (Top Side Operating Unit)

As shown in Fig. 3, the top side operating unit 61 includes a right heating power setting operating unit 70, left heating power setting operating unit 71, and a center operating unit 72. That is, on the front portion of the top side of the top plate 21, relative to a left-right center line of the main body A, on the right side, the right heating power setting operating unit 70 of the right IH heat source 6R; in the center portion, the center operating unit 72 of the radiant type central electric heat source 7 and the radiant type electric heat sources 22 and 23; and on the left side, the left heating power setting operating unit 71 of the left IH heat source 6L are each disposed.

On the top side operating unit, various keys are provided for using a stainless steel or metal cookware (not shown) that allows induction heating, and among the keys, there is a key 250 dedicated for bread. Note that rather than an dedicated key for a specific cooked food (for example, bread), a general key for when using a cookware may be exclusively provided, in which the pushing of the key will enable display of operable keys (input keys 141 to 145 described later) displaying the name of the desired cooked food (for example, bread) on an integrated display device 100 described later, and in which the user can input a desired cooking start command by touching with the finger the area of the corresponding key. Note that the cookware can be used on the grill 109 by inserting the cookware into the grill heating chamber 9 from the front opening 9A.

A compound cooking key 251 is further provided on the top side operating unit 61 that is for cooking with the cookware using both the IH heat source and the radiant type electric heat sources 22 and 23 (hereinafter, referred to as "compound heat cooking" or "compound cooking"). Embodiment 1 allows compound cooking with the right IH heat source 6R and the radiant type electric heat sources 22 and 23 of the grill heating chamber 9, and the compound cooking key 251 is provided on the right heating power setting operating unit 70 side described later (see Fig. 3).

Note that rather than a fixed key, button, a knob, or the like, the compound cooking key 251 may be integrated display means 100 (such as a liquid crystal screen) displaying the desired key allowing the user to touch an area of the key to input the compound cooking. That is, a method may be adopted in which an inputtable key shape is displayed at a suitable time on the integrated display means 100 by software in which an input operation is carried out by touching of the key.

### (Right Heating Power Setting Operating Unit)

Referring to Fig. 16, on the right heating power setting operating unit 70, one-touch setting keys 90 for each heating power are provided that can easily set the heating power of the right IH heat source 6R with a push of the key by the user. Specifically, three one-touch keys, that is, a low heating power key 91, a middle heating power key 92, and a high heating power key 93 are provided, in which the low heating power key 91 sets the heating power of the right IH heat source 6R to 300 W, the middle heating power key 92 to 750 W, and the high heating power key 93 to 2.5 kW. Further, a high heating power key 94 is provided on the right end of the right one-touch key. When it is desired for the heating power of the right IH heat source 6R to be 3 kW, this key is pushingly operated.

### (Left Heating Power Setting Operating Unit)

Similarly, a group of one-touch keys that are similar to the ones of the right heating power setting operating unit 70 are disposed also in the left heating power setting operating unit 71 for setting the heating power of the left IH heat source 6L.

### (Center Operating Unit)

Referring to Figs. 3 and 16, in the center operating unit 72, an operation button 95 of the operating switch that starts energization of the radiant type electric heat sources 22 and 23 of the grill heating chamber 9 used for grilling (roasting) and oven cooking and an operation button 96 of the operating switch that stops energization thereof are provided next to each other.

In the center operating unit 72, operation buttons 97A and 97B of the temperature control switch that sets the control temperature of the grilling, which is carried out by the radiant type electric heat sources 22 and 23, and the temperature of the electromagnetic cooking, which is carried out by the left IH heat source 6L and the right IH heat source 6R, by 1-degree increments or 1-degree decrements are provided sideways in one line. Further, the power on/off switching button 98 of the radiant type central electric heat source 7 and the configuration switches 99A and 99B that sets each level of the heating power incrementally or decrementally are also provided here.

Furthermore, a convenient menu key 130 is provided to the center operating unit 72. When the key is pushingly operated when setting to deep fry (using the left IH heat source 6L and the right IH heat source 6R), to deep-fry preheating status display (using the left IH heat source 6L and the right IH heat source 6R, and heating oil to a preset preheating temperature), and to timer cooking (cooking by energizing the left IH heat source 6L, the right IH heat source 6R, the radiant type central electric heat source 7, the radiant type electric heat sources 22 and 23 provided in the grill heating chamber 9 for a set time set by the timer switch), the desired input screen or the status display screen can be easily read to the integrated display means 100 described later.

On the right side of the key 250 dedicated for bread, a right IH convenient menu button 131R that is constituted by a hard button is provided, which is a configuration button to variously set the right IH heat source 6R. A similar configuration button is also provided to the left IH heat source 6L (not shown).

When the start switch that operates and starts the timer counter (not shown) is operated, the elapsed time from the starting point is measured and numerically displayed on the liquid crystal display screens 45R and 45L. Note that the indicating light of the liquid crystal display screen 45R and 45L penetrates through the top plate 21 and the elapsed time is clearly displayed to the user in units of "minute(s)" and "second(s)".

Similar to the right heating power setting operating unit 70, a left timer switch (not shown) and a left liquid crystal display 45L are provided to the left heating power setting operating unit 71 on the left side such that they are disposed in a symmetrical position relative to the left-right center line CL1 of the main body 1.

### (Heating Power Indicating Lamp)

On the right front side of the top plate 21 between the right IH heat source 6R and the right heating power setting operating unit 70, a right heating power indicating lamp 101R that indicates the largeness of the heating power of the right IH heat source 6R is provided. The right heating power indicating lamp 101R is provided in the vicinity of the bottom side of the top plate 21 so as to emit an indicating light to the top side through (penetrating through) the top plate 21.

Similarly, a left heating power indicating lamp 101L that indicates the largeness of the heating power of the left IH heat source 6L is provided on the left front side of the top plate 21 between the left IH heat source 6L and the left heating power setting operating unit 71. The left heating power indicating lamp 101L is provided in the vicinity of the bottom side of the top plate 21 so as to emit an indicating light to the top side through (penetrating through) the top plate 21. Note that the illustration of these indicating lamp 101R and 101L are omitted in the circuit configuration diagram of Fig. 13.

### (Display Means G)

The display means G of the cooking system according to Embodiment 1 includes the integrated display means 100 (see Figs. 1 to 3).

Referring to Figs. 1, 3, and 16, the integrated display means 100 is provided in the middle portion in the left and right direction of the top plate 21 and on the front side in the front and rear direction. This integrated display means 100 is constituted mainly by a liquid crystal display and is provided in the vicinity of the bottom side of the top plate 21 so as to emit an indicating light to the top side through (penetrating through) the top plate 21.

The integrated display means can be used to input and confirm the energization status (heating power, time period, and the like) of the left IH heat source 6L, the right IH heat source 6R, the radiant type central electric heat source 7 and the radiant type electric heat sources 22 and 23 of the grill heating chamber 9. That is to say, the heating condition such as the operation status and the heating power corresponding to the following three cases are clearly displayed, by means of characters, illustration, and graphs.
(1) The function of the left and right IH heat sources 6L and 6R (whether during cooking operation, for example).
(2) The function of the radiant type central electric heat source 7 (whether during cooking operation, for example).
(3) If cooking with the grill heating chamber 9, the operation procedures and function when heat cooking (for example, which of the one is currently being performed among roasting, grilling and oven cooking).

The liquid crystal screen used in the integrated display means 100 is a known dot matrix LCD screen. This screen is capable of providing a screen with high-definition (equivalent to QVGA with a resolution of 320 x 240 pixels or to VGA with 640 x 480 dots and that is capable of displaying 16 colors) and can display a large number of characters in a case where characters are displayed. Not only ones with one layer, the liquid crystal screen may be one displaying with more than two upper and lower layers to increase displayed information. The display area of the liquid crystal screen is a rectangular shape with a length (front-rear direction) of approximately 4 cm and width of 10 cm.

Further, the display area that displays information are divided into a plurality of areas each corresponding to a heat source (see Fig. 16). For example, the display is allocated into ten areas in total that are defined as below.
(1) An area 100L corresponding to the left IH heat source 6L (total of two, i.e., 100L1 for heating power and 100L2 for time period).
(2) An area 100M corresponding to the radiant type central electric heat source 7 (total of two, i.e., 100M1 for heating power and 100M2 for time period).
(3) An area 100R corresponding to the right IH heat source 6R (total of two, i.e., 100R1 for heating power and 100R2 for time period).
(4) A cooking area 100G of the grill heating chamber 9.
(5) A guiding area (one area, i.e., 100GD) that displays reference information related to each of the various cooking as required or by operation of the user, as well as notifying the user when an abnormal operation is detected or when using with an improper operation.
(6) A key display area 100F that displays six input keys 141, 142, 143, 144, 145, and 146 that are mutually independent and that has a function such that each various cooking conditions and the like can be directly input.
(7) A free display area 100N.

When the key of the free display area 100N is pushed, detailed and useful information on cooking is displayed in the guide area 100GD of the integrated display means 100 by means of character.

Further the overall background color of the display area is generally displayed in an unified color (white, for example); however, when in a case of "compound cooking", the display areas 100R and 100G changes into the same color that is different from the other heat sources 100L and 100M (for example, yellow or blue). This change of color can be performed by switching the operation of the back light when the display screen is a liquid crystal display; however detailed description will be omitted.

Although each of the above ten areas (display areas) are provided on the liquid crystal screen of the integrated display means 100, they are not each formed on or partitioned into individual physical displays. That is, they are established by software (program for a microcomputer) for screen display and their areas, shapes, and positions can be changed by the software as appropriate; however, in consideration of user usability, the order of alignment of the left IH heat source 6L, the radiant type central electric heat source 7, right IH heat source 6R, and the like is set at all times in the same order so as to match the left-right order of each heat source.

That is, on the display, information is displayed such that the left IH heat source 6L is on the left side, the radiant type central electric heat source 7 is in the center, and the right IH heat source 6R is on the right side. Further, the cooking display area 100G of the grill heating chamber 9 is at all times displayed on the front side relative to the area 100L corresponding to the above left IH heat source 6L, the area 100M corresponding to the above radiant type central electric heat source 7, and the area 100R corresponding to the right IH heat source 6R. Furthermore, the display area 100F of the input keys is displayed on the forefront at all times in any case whatsoever.

Additionally, as regards the input keys 141 to 146, a contact type key that changes its static capacitance by touch of the user's finger or the like is employed. With the user's light touch to a position corresponding to the key surface on the top side of the glass plate that covers the top side of the integrated display means 100, a valid input signal to an energization control circuit 200 is generated.

On the glass plate in a portion (area) constituting the input keys 141 to 146, there is no display whatsoever of characters, graphics, or symbols (including the arrows of the key 143 and 145 in Fig. 16) by means of printing or marking. The liquid crystal screen (key display area F) below these keys are configured to display characters, graphics, or symbols indicating the input functions of the keys according to each operation scene of the input keys.

Not all of the input keys 141 to 146 are always simultaneously displayed. As for a key that is invalid upon operation (an input key that does not have to be operated), such as the input key 144 in Fig. 16, it is in an inactive state such that the characters and graphics of the input function is not displayed on the liquid crystal screen. Operation of one of the active state input keys 141 to 146 will be a valid operation command signal to the control program that sets the operation of the energization control circuit 200.

Further, the input key 146 is a key that is operated when a cooking condition is to be determined or when cooking is to be started. When this is operated once and the cooking operation is started, the input key is changed to an input key displaying "STOP" (see Figs. 17 and 18). As regards other input keys 141 to 145, the input command may change as appropriate. The valid input function can be easily identified by the characters, graphics, or symbols displayed as appropriate.

Note that when a particular heat source is to be stopped while using multiple heat sources, in the case of Fig. 17, for example, pushing of the input key 143 will change the color or will flash each of the corresponding area so as to indicate that the area has been selected in the order of the area 100M corresponding to the radiant type central electric heat source 7, the area 100L corresponding to the left IH heat source 6L, and the area 100R corresponding to the right IH heat source 6R and by pushing the stop key 146 after calling (selecting) the desired corresponding area, the particular heat source is stopped. Whereas, when input key 145 is pushed, selection can be made in the other direction in the sequential order of area 100M corresponding to the radiant type central electric heat source 7, the area 100R corresponding to the right IH heat source 6R, and the area 100L corresponding to the left IH heat source 6L, and after calling the desired area, the stop key 146 may be pushed. "AM" is an active mark that is displayed besides the name of a heat source carrying out a heat cooking operation, and the user can recognize whether the heat source is driven or not by seeing if this mark is displayed or not.

### (Grill Heating Chamber)

As shown in Figs. 1 and 6, the front opening 9A of the grill heating chamber 9 is openably covered with the door 13, and the door 13 is supported by a support mechanism (not shown) such as rails or rollers in the grill heating chamber 9 such that the door 13 is movable in the front-rear direction by a user operation. Further, a window plate made of heat-resisting glass is disposed in a center opening 13A of the door 13 so as to allow visual recognition of the inside of the grill heating chamber 9 from the outside. "13B" is a handle protruded forward to perform an opening/closing operation of the door. Note that the grill heating chamber 9 forms a predetermined space SX (see Fig. 6) with the inside rear wall of the main body as described above. As described later, the exhaust duct 14 is disposed by utilizing this space, and the exhaust hood 12 is also formed.

The door 13 is connected to front ends of metal rails that extend horizontally in both the left and right side of the heating chamber 9. Generally, when cooking oily foodstuff, a metal saucer 108 (see Fig. 6) is placed on the rails. The saucer 108 is used while placing a metal grill 109 thereon. As such, when the door is drawn out horizontally to the front side, the saucer 108 (when the grill 109 is placed thereon, the grill, too) is drawn out horizontally to the front side of the grill heating chamber 9 along with the drawing out motion. Note that the saucer 108 is supported by merely being placed on the left and right two end portions of the metal rails, and the saucer 108 is detachable from above the rails independently.

Further, the shape of the grill 109 and the position, shape, and the like of the saucer 108 are devised so that they will not knock into the lower heater 23 and obstruct the saucer 108 from being drawn out to the front when drawing the saucer to the front. As such, the grill heating chamber 9 has a "double side grilling function" that heats foodstuff from above and below when meat, fish, or other foodstuff is placed on the grill 109 and when the radiant type electric heat sources 22 and 23 are energized (at the same time, upon time division, or the like). Furthermore, this grill heating chamber 9 is provided with an in-chamber temperature sensor 242 (see Fig. 13) that detects the temperature inside the chamber, and it is possible to cook while maintaining the temperature inside the chamber at a desired temperature.

As shown in Fig. 6, the grill heating chamber 9 is constituted by a cylindrical metal inner frame 9C, which has an opening 9B on all of the rear (back) side and an opening 9A on the front side, and an outer frame 9D that covers all of the outside of this inner frame while maintaining predetermined gaps with the inner frame, namely, gap 113 (below), gap 114 (above), both left and right gaps (115, not shown). Note that "307" in Fig. 6 is a space formed between the outer frame 9D of the grill heating chamber 9 and the bottom side of main body case 2.

The outer frame 9D has five sides, namely the left and right two sides, top side, bottom side, and the rear side and the entirety is formed of a steel sheet and the like. The inside surfaces of these inner frame 9C and outer frame 9D are formed with a coating that has high cleanability such as enamel, are coated with heat resistant coating film, or are formed with an infrared radiation film. When an infrared radiation film is formed, the infrared radiant quantity to the heated object such as foodstuff is increased, heating efficiency is increased, and improves uneven baking. "9E" is an outlet formed on the upper portion of the rear side wall of the outer frame 9D.

"14" is a metal exhaust duct that is disposed so as to communicate with the outside of the outlet 9E. The cross section of the passage of this exhaust duct is square or rectangular, and, as shown in Fig. 6, from midway, as the duct extends to the downstream side, the duct is inclined obliquely upwards, and subsequently is bent to a vertical direction such that the upper end opening 14A is ultimately in communication with the vicinity of the center vent hole 20C formed in the upper frame 20.

"121" is a deodorizing catalyst disposed in the position on the downstream side of the outlet 9E. The catalyst is activated by being heated with the electric heater (121H) for the catalyst and functions to remove the odorous component from the hot exhaust in the grill heating chamber 9 passing through the exhaust duct 14.

### (Exhaust Structure, Intake Structure)

As described above, a right vent hole (serves as an inlet) 20B, a center vent hole (serves as an outlet) 20C, and a left vent hole 20D that are long sideways are formed on the rear portion of the upper frame 20. A metal flat-plate shaped cover 130 (see Fig. 1), which is formed with numerous and small communication holes throughout, is detachably placed above these three rear vent holes so as to cover the entire upper side of the vent holes. The cover may be one with tiny holes serving as communication holes that is formed by press work on a metal sheet (also known as perforated metal), or other than that, may be a wire netting or one with a small gridded shape. In any case, the cover may be any that does not let the user's finger or foreign matter enter from above into each of the vent holes 20B, 20C, and 20D.

The suction 37B in the uppermost portion of the suction tube 37A of the fan case 37 is located immediately below the right end portion of the cover 130 such that the suction is capable of introducing external indoor air such as air in the kitchen into the left and right cooling chamber 8R and 8L in the main body A through the communication holes of the cover.

As shown in Fig. 2, the upper end of the exhaust duct 14 is positioned in the rear exhaust hoods 12. In other words, in both the left and right side of the exhaust duct 14, the rear exhaust hoods 12, which are in communication with the space 116 that is formed around the grill heating chamber 9, are secured. The grill heating chamber 9 is disposed with a predetermined space 116 with the horizontal partition plate 25, in which this space is ultimately in communication with the rear exhaust hoods 12. As mentioned before, the inside of the upper portion component chamber 10 is in communication with the rear exhaust hoods 12 through the pair of outlets 28A that are formed in the rear partition plate 28, when the cooling air flowing in the upper portion component chamber 10 (arrow Y5 in Fig. 5) is discharged to the outside of the main body 1 as arrow Y9 of Fig. 2, the air inside the space 116 is induced and discharged with this.

### (Auxiliary Cooling Structure)

In Figs. 4 and 5, "46" is a front component case accommodating therein a mounting substrate 56 that fixes thereon various electrical and electronic components 57 of the top side operating unit 61 and light emitting elements (LED) that indicates the heating power during induction heat cooking with light. The front component case is constituted by a transparent plastic lower duct 46A whose top side is opened and a transparent plastic made upper duct 46B that serves as a cover that adheres to the top side opening of this lower duct so as to cover the opening. In the right edge portion and the left end portion of the lower duct 46A, vent holes 46R and 46L are opened, respectively, and in the rear portion in the center, a notch permitting ventilation is formed.

On the ceiling of the upper duct 46B, the integrated display means 100 is disposed in the middle and liquid crystal display screens 45R and 45L are disposed in the right and left, respectively. The cooling air of the fan 30 enters the ventilation space 42H of the cooling duct 42 through the second outlet 34B of the component case 34, enters the front component case 46 from below the liquid crystal display screen 45R and 45L through a vent hole 42K that has been formed so as to correspond with the ventilation space 42H, and is discharged from the notch 46 into the upper portion component chamber 10. As such, both the liquid crystal display screen and the integrated display means 100 are cooled by the cooling air from the fan 30 at all times.

In particular, since the cooling air from the second outlet 34B of the component case 34 is not air that has cooled the left and right IH heating coils 6LC and 6RC that become high in temperature during the induction heating operation, even though with a small volume of cooling air, increase of temperature of the liquid crystal display screens 45R and 45L and the integrated display means 100 can be effectively suppressed. Especially, since the rear positions of the left and right IH heating coils 6LC and 6RC that are on the downstream side of the flow of the cooling air (arrow Y5 in Fig. 5) are not cooled easily, in Embodiment 1, the relative portion is cooled by supplying the cold air from the first outlet 34A to the ventilation space 42F directly.

### (Auxiliary Exhaust Structure)

As shown in Fig. 6, a cylindrical bottom portion 14B is formed having a shape that is sunk downwards a level at a portion that is on the downstream side of the deodorizing catalyst 121 of the exhaust duct 14. "14C" is a vent hole formed at this bottom portion 14B. "106" is an auxiliary exhaust purpose axial flow fan that faces this vent hole in which "106A" are its rotor blades and "106B" is a drive motor that rotates the rotor blades 106A. The fan is supported by the exhaust duct 14. During cooking with the grill heating chamber 9, since the grill heating chamber 9 becomes high in temperature, the inside air pressure naturally increases thus discharging high-temperature ambient air therefrom which ascends through the exhaust duct 14. By operating the fan 106 and taking in air inside the main body A into the exhaust duct 14, as indicated by arrow Y7, the high-temperature air in the grill heating chamber 9 is induced to this fresh air and is exhausted, as indicated by arrow Y8, from the upper end opening 14A of the exhaust duct 14 while decreasing its temperature.

The auxiliary exhaust purpose axial flow fan 106 is not always operated during operation of the cooking system and is operated while heat cooling is carried out with the grill heating chamber 9. This is because high-temperature hot air is discharged to the exhaust duct 14 from the grill heating chamber 9. Further, the air flows Y7 and Y8 in Fig. 6 and the air flows Y1 to Y5 in Fig. 5 are completely unrelated and is not a continuous flow.

### (Control Means F)

The control means F of the cooking system according to Embodiment 1 includes the energization control circuit 200 (see Fig. 13).

Fig. 13 is a component diagram that illustrates the entirety of the control circuit of this cooking system, in which the control circuit is formed with an energization control circuit 200 that is constituted by embedding a single or a plurality of microcomputer therein. The energization control circuit 200 is constituted by four parts, namely, an input unit 201, an output unit 202, a storage unit 203, and an arithmetic control unit (CPU) 204, is supplied with DC power through a voltage stabilizer (not shown), and serves a central role as control means controlling all of the heat sources and the display means G. In fig. 13, the inverter circuit 210R for the right IH heat source 6R is connected to a commercial power supply with a voltage of 100V or 200V through the rectifier circuit (also known as a rectifier bridge circuit) 221.

Similarly, in parallel with this inverter circuit 210R for the right IH heat source 6R, the inverter circuit 210L for the left IH heat source 6L, which has a similar basic configuration as that of the right IH heating coil 6RC (induction heating coil) shown in Fig. 13, is connected to the commercial power supply through the rectifier bridge circuit 221. That is, the left IH heating coil 6LC (induction heating coil) includes the rectifier bridge circuit 221 whose input side is connected to the bus-line of an commercial power supply; the direct current circuit that includes the coil 222, which is connected to the DC side output terminal, and the smoothing capacitor 223; a resonance circuit constituted by a parallel circuit of the right IH heating coil 6RC, which one end is connected to a connecting point of the coil 222 and the smoothing capacitor 223, and a resonance capacitor 224; and the IGBT 225 serving as switching means in which the collector side is connected to the other end of the resonance circuit.

The major difference between the inverter circuit 210L for the left IH heat source 6L and the inverter circuit 210R for the right IH heat source 6R is that the inverter circuit 210L has the main heating coil MC and the sub heating coils SC. Accordingly, the inverter circuit 210L for the left IH heat source 6L is constituted by the inverter circuit MIV for the main heating coil, which supplies electric power to the inner coil LC2 and the outer coil LC1, that is, to the main heating coil MC, and the inverter circuits SIV1 to SIV 4 for the sub heating coils, which individually supplies electric power to each of the four independent sub heating coils SC1 to SC4 described later. Further, the timing of energization and the amount of energization of the four sub heating coils SC1 to SC4 are all determined by the energization control circuit 200.

"211" is a heater driving circuit of the radiant type central electric heat source 7; "212" is a heater driving circuit that drives the radiant type electric heat source 22 for in-chamber heating of the grill heating chamber 9; similarly, "213" is a heater driving circuit that drives the radiant type electric heat source 23 for in-chamber heating of the grill heating chamber 9; "214" is a heater driving circuit that drives a catalytic heater 121H provided midway in the exhaust duct 14; and "215" is a driving circuit that drives the liquid crystal screen of the integrated display means 100.

The emitter of the IGBT 225 is connected to a common connecting point of the smoothing capacitor 223 and the rectifier bridge circuit 221. The flywheel diode 226 is connected between the emitter of the IGBT 225 and the collector so that the anode of the flywheel diode 226 is on the emitter side. "N" refers to a metal pan that is a heated object.

"227" is a current detection sensor and detects the current flowing through the resonance circuit constituted by the parallel circuit of the right IH heating coil 6RC and the resonance capacitor 224R. The detection output of the current detection sensor 227 is input to the placement-of-heated-object determination unit 280 described later; through this, determination information on whether there is a heated object is supplied to the input unit of the energization control circuit 200, and determination of the presence of the heated object N is performed. Further, if an inappropriate pan (heated object N) is used in the induction heating or if by some kind of accident, an undercurrent or an overcurrent having a value difference at or over a predetermined value when compared to a normal current value is detected, the energization control circuit 200 controls the IGBT 225 through the driving circuit 228 to instantaneously stop the energization of the induction heating coil 220.

Similarly, since the inverter circuit MIV for the main heating coil and the inverter circuits SIV1 to SIV 4 for the sub heating coils, which individually supplies electric power to each of the four independent sub heating coils SC1 to SC4, has the same circuit configuration of that of the inverter circuit 210R for the right IH heat source 6R, description will be omitted. However, the common circuit configuration is denoted collectively as the inverter circuit 210L for the left IH heat source 6L in Fig. 13 in which "6LC" is the left IH heating coil, "224L" is a resonant capacitor. The inverter circuit MIV for the main heating coil MC is also connected to the above mentioned rectifier bridge circuit 221; the direct current circuit that includes the coil 222 and the smoothing capacitor 223; a resonance circuit constituted by a parallel circuit of the main heating coil MC, which one end is connected to a connecting point of the coil 222 and the smoothing capacitor 223, and a resonance capacitor 224; and the IGBT 225 serving as switching means in which the collector side is connected to the other end of the resonance circuit.

The current detection sensor 227 is, although not shown, provided to the inverter circuit 210L of the left IH heat source 6L in the same manner. Note that as for the current detection sensor 227, it may be constituted by way of using a shunt that measures current using a resistor or using a current transformer.

"260" is a driving circuit that drives the inverter circuit MIV for the main heating coil and serves the same role as the driving circuit 228. Similarly, "261 to 264" are driving circuits that each drives the corresponding inverter circuits SIV1 to SIV4 for the sub heating coils.

"226" is a current detection sensor that detects the current flowing through the resonance circuit constituted by the parallel circuit of the main heating coil MC and the resonant capacitor (not shown); similarly, "267A", "267B", "267C (not shown)", and "267D (not shown)" are current detection sensors that detects current flowing through resonance circuits constituted by parallel circuits of the sub heating coils SC and the resonant capacitors (not shown). These current sensors serve similar roles to that of the current detection sensor 227.

As in the Embodiment, in a cooking system that heats an heated object N with an induction heating method, the power control circuit for distributing high-frequency power to the left and right IH heating coils 6LC and 6RC is , so called, a resonant inverter. It is configured with inductance of the left and right IH heating coils 6LC and 6RC including that of the heated object N (metal object), a circuit to which the resonant capacitor (224L and 224R in Fig. 13) is connected, and the switching circuit element (IGBT, 225 in Fig. 13) in which on/off control is carried out with a driving frequency of approximately 20 to 40 kHz.

Further, in the resonant inverter, there is a current resonance type suitable for a 200-V power supply and voltage resonance type suitable for a 100-V power supply. The resonant inverter circuit is divided into, a so called, half bridge circuit and a full bridge circuit depending on to where the connection target of the left and right IH heating coils 6LC and 6RC and the resonant capacitors 224L and 224R is switched by the relay circuit.

As described above, when induction heating an heated object N (metal object) by energizing the left and right IH heating coils 6LC and 6RC, in a case in which the heated object N is of a magnetic material such as iron, current with a frequency of approximately 20 to 40 KHz may be distributed by controlling each switching circuit element (IGBT, 225 in Fig. 13) with a driving frequency of approximately 20 to 40 KHz in each circuit connected to the corresponding resonant capacitor (224L or 224R in Fig.13).

On the other hand, in a case in which the heated object N is made of a material with high electrical conductivity such as aluminum or copper, in order to obtain the desired heating output, a large current needs to be induced on the bottom side of the heated object N by distributing a large current to the left and right IH heating coils 6LC and 6RC. Accordingly, in a case in which the heated object N is made of a material with high electrical conductivity, on/off control is performed with a driving frequency of 60 to 70 KHz.

"33" is a motor driving circuit of the drive motor 300 of the fan 300 to keep the internal space of the main body A within a fixed temperature range and "231" is a driving circuit of the drive motor 106B of the fan 106 disposed in the exhaust duct 14.

### (Temperature Detecting Circuit)

Referring to Fig. 13, "240" is a temperature detecting circuit input with temperature detection information from each of the following temperature detecting elements.
(1) The temperature detecting element 31R provided in the middle portion of the right IH heating coil 6RC.
(2) The temperature detecting element 31L provided in the middle portion of the left IH heating coil 6LC.
(3) A temperature detecting element 241 provided in the vicinity of the electric heater of the radiant type central electric heat source 7.
(4) The temperature detecting element 242 for detecting the in-chamber temperature of the grill heating chamber 9.
(5) A temperature detecting element 243 disposed in the vicinity of the integrated display means 100.
(6) Temperature detecting elements 244 and 245 that are each adhered to and mounted on the corresponding one of the two radiation fins 43A and 43B inside each component case 34 and that individually detects the temperature of the corresponding one of the two radiation fins.

Note that the temperature detecting element may be provided to two or more places of the subject of the temperature detection. For example, a more accurate temperature control may be achieved by providing each of the temperature sensors 31R of the right IH heat source 6R to a middle portion of the right IH heating coil 6RC and its circumference. Further, each temperature detecting element may be configured to employ different principles. For example, the temperature detecting element in the middle portion of the right IH heating coil 6RC may be one using an infrared system and the temperature detecting element on the outer circumference may be a thermister type.

On the basis of the temperature measurement state from the temperature detecting circuit 240, the motor driving circuit 33 of the drive motor 300 of the fan 30 continuously operates the fan 30 and carries out cooling with air, so that each of the temperature measured portion does not become a predetermined temperature or higher.

The temperature detecting element 31L provided in the middle portion of the left IH heating coil 6LC is constituted by five temperature detecting elements 31L1 to 31L5, which will be described later.

### (Sub Heating Coils)

Referring to Figs. 9, 11, and 12, "6LC1" is the circular outer coil with a center point X1 and a maximum outer diameter DA (= twice the radius R3) and "6LC2" is an inner coil circularly winded inside the outer coil with a space 270 therebetween and has the same center point X1. The main heating coil MC is configured with two circular coils that are concentric circles.

"SC1 to SC4" are four sub heating coils disposed while maintaining a predetermined space 271 with the outer circumference of the main heating coil MC. As shown in Fig. 11, the sub heating coils are curved along a concentric circle around the center point X1 having a radius R2 and are disposed so as to be interspersed with substantially same distances between each other. Each is shaped in a curved ellipse or oval. These sub heating coils are also formed so as to have an ellipse or oval outer shape by twisting one or a plurality of assembled wires and spirally winding this, and by partially binding with a binding tool or by hardening with heat-resistant resin.

As shown in Fig. 11, these four sub heating coils SC1 to SC4 are disposed on a circle with a radius R3 from the center point X1 while maintaining a space 273 with a set size between each other. The line of circumference having a radius R3 coincides with the center line of each sub heating coils SC1 to SC4 in the longitudinal direction. In other words, around the circular main heating coil MC that is constituting a closed circuit, four sub heating coils SC1 to SC4 are disposed each forming an arc on the inside (on the side that is facing the outer circumference of the main heating coil MC) having a radius R2 from the center X1 of the main heating coil, in which each of the assembled wires are curved and extended with a radius of curvature in accordance with the corresponding arc, thus constituting an electrically closed circuits. The height (thickness) of the main heating coil MC and the height (thickness) of each of the sub heating coils SC1 to SC4 are the same and are horizontally provided and fixed on coil supports 290 described later such that the facing distances between their upper sides and the bottom side of the top side 21 are the same.

As shown in Fig. 9, these four sub heating coils are arranged such that their maximum outer diameters are DB. As described in Fig. 10, the outer coil 6LC1 and the inner coil 6LC2 are connected in series. Accordingly, the outer coil 6LC1 and the inner coil 6LC2 are energized at the same time.

Each of the sub heating coils SC1 to SC4 is not a perfect circle and may be divided into two upper and lower layers to facilitate manufacturing. That is, it may be manufactured by coiling about 30 fine wires (element wire) of approximately 0.1 mm to 0.3 mm, twisting one or a plurality of this assembled wire, and spirally winding this into two coils having a completely same planar shape that is of an ellipse or oval outer shape, and then connecting the two in series, thus forming an electrically single coil.

"272" is a space (cavity) spontaneously created when forming each of the sub heating coils SC1 to SC4. This space can be used to air-cool the sub heating coil itself and is a passage through which the air for cooling supplied from the fan 30 ascends. "290" is a coil support that is integrally formed with a non-metallic material such as thermally stable plastic or the like, has eight arms 290B radially extending from the center point X1, and has an outermost circumferential edge 290C with an annual shape connected to the arms.

"290D1" to "290D5" are integral or separate supports mounted on the upper sides or lateral sides of the four arms 290B and each is a portion that supports the corresponding one of infrared sensors 31L1 to 31 L5 (see Figs. 9 and 12). "290A" are support protrusions integrally formed on the four arms 290B that face the center portion of the sub heating coils SC1 to SC4 among the eight radially extending arms 290B. Three support protrusions are interspersed to four locations such that the first one is in the space 272 of the corresponding one of the sub heating coils SC1 to SC4, the second one further to the center point X1 in relation to the corresponding one of the sub heating coils SC1 to SC4, whilst the third one is on the outside.

"290E" are two supporting tongues each integrally formed to the four arms 290B that faces each of the two ends of the sub heating coils SC1 to SC4, on which the two ends of the sub heating coils SC1 and SC4 are placed. The middle portion of the sub heating coils SC1 to SC4 is placed on the top side of the other two arms 290B.

"290F" are cylindrical fixing portions each integrally and protrudingly formed on each top side of the supporting tongue 290E. These fixing portions are located in positions corresponding to the two ends of the spaces 272 when the sub heating coils SC1 to SC4 are disposed. With the fixing portions 290F and the support protrusions 290A, three points of the sub heating coils SC1 to SC4, that is, the center portion of the spaces 272 and the inside and outside positions of the sub heating coils SC1 to SC4, are positionally controlled. Accordingly, there will be no deformation caused by careless side shifting or by expansion force (typical ones are indicated in Fig. 12 by dot and dash line arrows FU and FI) due to heating.

Note that the reason why the support protrusions 290A and the fixing portions 290F control the positions by partially abutting to the inside and the circumference of each of the sub heating coils SC1 to SC4 without forming a wall (also called a rib) surrounding the whole circumference of each coil is to free the inside and the circumference of the sub heating coils SC1 to SC4 as much as possible so that it becomes a passage for the air for cooling.

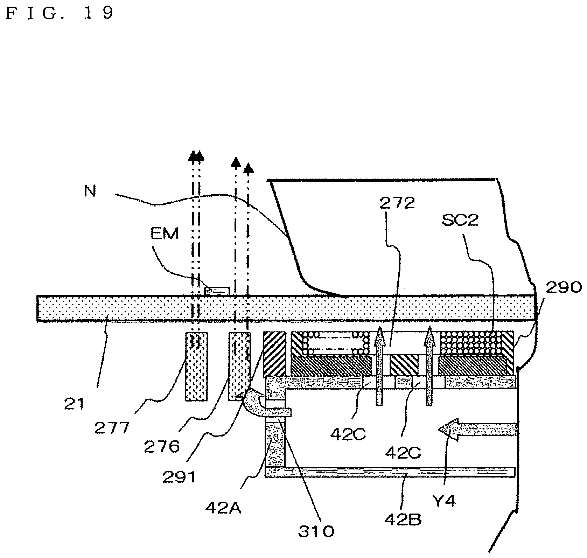

As shown in Figs. 15 and 19, the coil support 290 is placed on the top side of the upper case 42A of the cooling duct 42. The coil support is cooled by the cooling air that is blown up from the blow out hole 42C of the cooling duct and the main heating coil MC and the sub heating coils SC1 to SC4 are cooled so that they do not reach an abnormally high temperature due to the heat generation. Accordingly, substantially whole of the coil support 290 is a gridded shape (see Fig. 12) so as to ensure air permeability. The magnetic flux leakage prevention materials 73 that are radially disposed from the center point X1 partially traverse the passage of the air. Further, the bottom sides of the sub heating coils SC1 to SC4 are in an exposed state except for portions that are facing the arms 290B and the supporting tongues 290E, thus heat radiation effect is improved by the exposed portion.

The magnetic flux leakage prevention materials 73 are mounted on the bottom side of the coil supports 290 in a radial state from the center point X1. As shown in Fig. 11, "273" are spaces created between the adjoining sub coils SC1 to SC4. This space is provided so that the adjoining sub heating coils SC1 to SC4 does not magnetically interfere with each other when they are energized at the same time. That is, when driving current is distributed to the circular main heating coil MC in an anticlockwise direction when seen from above, driving current is also distributed to the sub heating coils SC1 to SC4 in an anticlockwise direction. Accordingly, the direction of current will be the same between the main heating coil MC and the sub heating coils SC1 to SC4. However, the direction of current between two adjoining sub heating coils SC1 to SC4 will be opposite to each other, and, hence, it has been devised to reduce these magnetic interference.

It is desirable that the amount of space 273 between the end portions of the sub heating coils SC1 to SC4 is larger than the space 271. Further, Fig. 11 is not a diagram that illustrates the precise dimensions of the actual product and although it cannot be understood directly from the figure, it is preferable that the transverse dimension, relative to the line passing through the center point X1, of the spaces (cavities) 272 of the sub heating coils SC1 to SC4, that is, the width indicated by the arrow in Fig. 11, is larger than the space 271. The above is for reducing the magnetic interference, since the current that flow through the sub heating coils SC1 to SC4 flow in counter directions to each other. Compared to the above, the space 271 may be narrow since cooperative heating is conducted by magnetic coupling.

### (Individual Light Emitting Unit)

Referring to Figs. 9, 11, 13, and 15, "276" are illuminants that are disposed in four locations interspersed along a concentric circle of the main heating coil MC. Each illuminant is provided with a light source (not shown) using an electric lamp, organic EL, or light emitting diode (LED) and a light guide (not shown) that guides light entering from the light source and is driven by a driving circuit 278 shown in Fig. 13.

The light guide may be of synthetic resin including acrylic resin such as acrylic resin, polycarbonate, polyamide, or polyimide or a transparent material such as glass. As shown in Fig. 15, the top end side of the light guide is directed towards the bottom side of the top plate 21 and the light from the light source is radiated from the top end side of the light guide as indicated by the dot and dash line in Fig. 15. Note that, as above, an illuminant that emits light in a liner manner in the upwards direction is proposed in Japanese Patent No. 3941812, for example. Emitting and lighting of this illuminant will enable the user to know whether each of the sub coils SC1 to SC4 is in an induction heating operation, and accordingly, this illuminant will be denoted as an "individual light emitting unit".

### (Wide Area Light Emitting Unit)

Referring to Figs. 9, 11, 13, and 15, "277" is an annular illuminant that has a maximum outer diameter of DC on an concentric circle as that of the individual light emitting units 276, in which the annular illuminant surrounds the outside of the individual light emitting units 276 with a predetermined space 275 in between. This illuminant is provided with a light source (not shown) similar to that of the individual light emitting units 276 and a light guide that guides light entering from the light source and is driven by a driving circuit 278 as shown in Fig. 13.

As shown in Fig. 15, the top end side of the light guide of this illuminant faces the bottom side of the top plate 21. As indicated by the dot and dash line in Fig. 15, light from the light source is radiated from the top end side of the light guide. With the emitting and lighting of this illuminant, the outer edge portion of the group of sub heating coils SC1 and SC4 and the main heating coil MC can be distinguished. Accordingly, this illuminant may be referred to as "wide area light emitting unit".

The position of the guide mark 6LM that is a circle (a solid line in Fig. 1 and 3) displayed on the top plate 21 does not match the position of the individual light emitting units 276.

This is because while the position of the guide mark 6LM substantially corresponds to the outer diameter DA of the main heating coil MC, the individual light emitting units 276 have sizes that surround the sub heating coils SC1 to SC4. Further, while the position of the circular cooperative heating area mark EM that is displayed on the top plate 21 substantially coincides with the position of the wide area light emitting unit 277, since the cooperative heating area mark EM is formed on the top plate typically by means of print or the like, the top end portion of the wide area light emitting unit 277 is set so as to adjacently face a position a few millimeters outside of the cooperative heating area mark EM in consideration of the print or coating of the paint (using a material that does not transmit most of the visible light). Note that if transparency of the cooperative heating area mark EM is ensured, they may be completely matched.

### (Arrangement of Infrared Sensor)

As shown in Fig. 9, a single infrared sensor 31L is disposed in the space 270. This temperature sensor detects the temperature of the heated object N such as a pan and the like that is placed on the main heating coil MC. On the outside of the main heating coil MC, infrared sensors 31 L2 to 31 L5 for the sub heating coils SC1 to SC4 are arranged. Each of the infrared sensors is disposed in the corresponding projection-shaped support protrusion 290A formed in the coil support 290.

Note that the infrared sensors 31 L2 to 31 L5 may not be used in order to exert the function of the placement-of-heated-object determination unit 280, that is, the function determining whether there is a heated object N placed or not, and, alternatively, a light detecting unit (photosensor) may be used. This is because reaching of light from the indoor lighting and light of the natural world such as sunlight from above the top plate 21 can be determined. When there is no heated object N placed, the light detecting portion below the heated object N detects ambient light such as that of an indoor lighting, and accordingly this can be used as determination information indicating that no pan or the like is placed.

Temperature data from each of the temperature sensors 31R, 31L, 241, 242, 244, and 245 is sent to the energization control circuit 200 through the temperature detecting circuit 240. However, the temperature detection data from the infrared sensors (that is, all of the five sensors 31L1 to 31 L5) related to the heating coils 6RC and 6LC is input to the placement-of-heated-object determination unit 280.

"291" is a ring-shaped metal shielding ring disposed on the outermost side of the coil support 290.

### (Operation of Cooking System)

Next, an outline of an operation of the cooking system configured as above will be described.

A basic operation program from when power is activated to the start of preparation of cooking is stored in the storage unit 203 in the energization control circuit 200.

First, the power plug is connected to a commercial power supply of 200 V and the operation button 63A (see Fig. 2) of the main power switch 63 is pushed and power is activated.

Then a predetermined low supply voltage is supplied to the energization control circuit 200 through the voltage stabilizer (not shown) and the energization control circuit 200 is started up. The energization control circuit 200 carries out self-diagnosis with its control program and if there is no abnormality, the motor driving circuit 33 that drives the drive motor 300 of the fan 30 is pre-driven. Further, the left IH heat source 6L, the right IH heat source 6R, and the driving circuit 215 of the liquid crystal display of the integrated display means 100 are each pre-activated.

The temperature detecting circuit 240 reads the temperature data from each of the temperature sensors 31R, 31L (unless otherwise specified, in the description hereinafter, including all of 31L1 to 31L5), 241, 242, 244, and 245 and sends the data to the energization control circuit 200.

As above, since data such as circuit current, voltage, and temperature of the main components are collected to the energization control circuit 200, the energization control circuit 200 carries out determination of aberrant heating as an abnormality monitoring control before cooking. For example, when the surrounding area of the liquid crystal display substrate of the integrated display means 100 is higher than the heat resistant temperature of the liquid crystal screen substrate (for example, 70 degrees C), then it is determined as abnormally high temperature.

Further, the current detection sensor 227 detects the current flowing through the resonance circuit 225 constituted by the parallel circuit of the right IH heating coil 6RC and the resonant capacitor 224. This detection output is supplied to the input unit 201 of the energization control circuit 200 and is compared with the regular current value of the determination reference data that is stored in the storage device 203. If undercurrent or overcurrent is detected, the energization control circuit 200 determines that there is some kind of an accident or a defective conduction, and determination of abnormality is made.

When no determination of abnormality is carried out during the above self-diagnosis, "preparation to start cooking is completed". However, if determination of abnormality is carried out, a predetermined procedure under abnormality is carried out and start of cooking is disallowed (a similar abnormality detection is carried out to the left IH heating coil 6LC).

If no determination of abnormality is carried out, displays indicating that heating operation is operable are displayed in the areas 100L1, 100L2, 100M1, 100M2, 100R1, 100R2, and 100G corresponding to each heat source in the integrated display means 100. Then, a display instructing the user to select a desired heat source and, when induction heating, place the heated object N such as a pan on the desired guide mark 6LM, 6RM, or 7M of the heat source displayed on the top plate 21 (if a speech synthesis device is added so as to work in association with the integrated display means 100, the above operation is encouraged to the user by speech at the same time). Further, the energization control circuit 200 commands all of the individual light emitting units 276 and the wide area light emitting unit 277 to emit and light in a predetermined color (such as yellow).

### (Cooking Mode)

Next, a case will be described in which the mode is shifted to a cooking mode after the abnormality monitoring processing before cooking has been completed with an explanatory case in which the right IH heat source 6R is used.

There are two ways to use the right IH heat source 6R, that is, to use the front side operating unit 60 and to use the top side operating unit 61.

### (Starting Cooking with Front Side Operating Unit)

First, a case in which the front side operating unit 60 is used will be described.
First of all, the right operation dial 64R of the front side operating unit 60 is turned to the left or right (the heating power is set in accordance with the amount turned).

Although not shown, three independent timer dials are provided to the front lower portion of the front side operating frame 62 of the front side operating unit 60, and the timer of the right IH heat source 6R is set to a certain time period. With this, operating signals are input to the energization control circuit 200 and cooking conditions such as the heating power and the heating time is set.

Next, the energization control circuit 200 drives the driving circuit 228 and drives the right IH heat source circuit 210R. Further, the integrated display means 100 is driven by the driving circuit 215 and the cooking conditions such as the heating power and the cooking time is displayed in this display area. The driving circuit 228 applies drive voltage to the gate of the IGBT 225, and, thus, high-frequency current flows in the right IH heating coil 6RC. However, electrical heating with high heating power is not carried out from the start, but a detection of suitability of the heated object N such as a pan is carried out as below.

The current detection sensor 227 detects the current flowing through the resonance circuit constituted by the parallel circuit of the right IH heating coil 6RC and the resonant capacitor 224. This detection output is supplied to the input unit 201 of the energization control circuit 200. Further, when compared with the regular current value, if undercurrent or overcurrent is detected due to some kind of an accident or a defective conduction, the energization control circuit 200 determines that there is abnormality. The energization control circuit 200 also has a function of determining whether the size of the used pan (heated object N) is appropriate or not in addition to the above type of abnormality detection function.

Specifically, for the first few seconds, a predetermined electric power (1 kW, for example) is distributed rather than the heating power (electric power) that the user has set and the input current value at that time is detected by the current detection sensor 227.

That is, it is known that, when the IGBT 225, which serves as switching means, is driven by the energization control circuit 200 by a driving signal with predetermined electric power and a same conduction ratio, the current flowing through the portion of the current detection sensor 227 in a case in which a pan (heated object N) with a diameter smaller than the area of the right IH heating coil 6RC is placed on the top plate 21 is smaller than the current flowing through the portion of the current detection sensor 227 in a case in which a pan (heated object N) with a diameter larger than the area of the heating coil 220 is placed on the top plate 21.

Therefore, values of the current flowing through the portion of the current detection sensor 227 when an excessively small pan (heated object N) is placed are provided as determination reference data on the basis of a result derived from an experiment conducted in advance. Accordingly, when an excessively small current is detected by the current detection sensor 227, it can be determined by the energization control circuit 200 that it is used in an abnormal state, and, shifting to the processing route for abnormal processing is carried out.

Note that even when the heating power is one that the user has set, for example, if a normal heating state can be maintained by the energization control circuit 200 changing the duty factor to the switching means 225 and by reducing the conduction ratio to a permissible range, then an electric power adjusting control processing is carried out automatically. Accordingly, even if a small current value is detected, not all are shifted to the abnormal processing uniformly and unconditionally.

As above, in a state in which determination of the pan (heated object N) is carried out, characters "Specifying Suitability of Pan" is first displayed in the display area 100R2 of the right IH heat source 6R. Further, a few seconds later, in accordance with the result of the determination of the above abnormal current detection monitoring processing, warning characters such as "Used Pan Too Small" and "Use Larger Pan (with diameter of 10 cm or larger)" are displayed when the pan (heated object N) is too small.

When this result of the determination of the suitability of the pan is produced, the area of the display areas 100R1 and 100R2 of the right IH heat source 6R are enlarged a few times from the states of Fig. 17 and display indicating that the pan (heated object N) is not appropriate is displayed in the display area. When both the left IH heat source 6L and the radiant type central electric heat source 7 are not used, the display areas 100R1 and 100R2 of the right IH heat source 6R are enlarged to sizes that cover the display areas 100L1, 100L2, 100M1, and 100M2 of the left IH heat source 6L and the radiant type central electric heat source 7.

Subsequently, if the user does not take measures such as exchanging the pan (heated object N), after a certain time period after the display indicating that the pan (heated object N) is too small in the display area E, while not stopping the energization control circuit 200, the heating operation of the right IH heat source 6R is automatically stopped for a moment.

If the user changes the pan (heated object N) to a larger one, the user will be able to resume cooking once more by carrying out a cooking re-start operation.

When it is determined that the pan (heated object N) is adaptable by performing the above pan (heated object N) detection operation, the energization control circuit 200 carries out an energization control processing that automatically accommodates power so that the right IH heat source 6R exerts its original set heating power. With this, the heated object N such as a pan or the like becomes high in temperature by the high-frequency magnetic flux from the right IH heating coil 6RC, and thus enters an electromagnetic induction heat cooking operation (cooking mode).

The direct-current voltage that is obtained by the rectifier bridge circuit 221 and the smoothing capacitor 223 is input to the collector of the IGBT 225 serving as a switching element. The on/off control of the IGBT 225 is performed with the input of the driving signal from the driving circuit 228 to the base of the IGBT 225. By combining the on/off control of the IGBT 225 and the resonant capacitor 224, a high-frequency current is generated in the right IH heating coil 6RC and due to the electromagnetic induction effect caused by this high-frequency current, eddy current is generated in the heated object N such as a pan placed on the top plate 21 that is above the right IH heating coil 6RC. Accordingly, the eddy current that has been generated in the heated object N turns into Joule heat and the heated object generates heat being able to be used for cooking.

The driving circuit includes an oscillator circuit, and the drive signal that is generated by this oscillator circuit is supplied to the base of the IGBT 225 thus carrying out the on/off control of the IGBT 225. By controlling the oscillatory frequency and the oscillatory timing of the oscillator circuit of the driving circuit 228, the conduction ratio and the conduction timing of the right IH heating coil 6RC are controlled, and, thus, the frequency of the current and the like is controlled. As such, the heating power control of the right IH heating coil 6RC is enabled.

Note that when a command stopping the energization of the right IH heat source 6R is issued, the energization of the right IH heat source 6R is stopped; however the operation of the fan 30 is continued for two to five minutes after the stop of the above energization. This will prevent, beforehand, the overshoot problem from happening that is a rapid increase in temperature due to hot air stagnating around the right IH heating coil 6RC of the right IH heat source 6R immediately after the suspension of the fan 30. Further, this can prevent ill effect of the temperature increase of the integrated display means 100. This time period to continue the operation is determined by the energization control circuit 200 with a predetermined formula and a numerical table corresponding to the state of temperature increase until the stop of energization and conditions such as the indoor temperature and the high/low of the operated heating power of the heat source.

However, the energization of the fan 30 will be also suspended at the same time if it has been determined that the cooling fan itself is malfunctioning (for example, when only the temperature of the cooling fans 43A and 43B are increasing) such as detection of abnormal current from the fan 30.

The liquid crystal display substrate of the integrated display means 100 is heated by the reflected heat from the bottom portion of the heated object N, which is heated during heat cooking with the left and right IH heat source 6L and 6R, and the radiant heat from the top plate 21.

Further, in a case in which a deep fry pan (heated object N) with high temperature after its use is left on the middle portion of the top plate 21, the liquid crystal display substrate will also receive heat from the high temperature (approximately 200 degrees C) pan (heated object N).

Accordingly, in Embodiment 1, the integrated display means 100 is cooled by air from both the left and right sides with the fan 30 to suppress increase in temperature.

When the fan 30 is driven under a normal operating environment, air outside the main body 1 is drawn into the fan case 37 through the suction 37B of the suction tube 37A of the fan case 37. The air that has been drawn in is discharged in a horizontal direction from the outlet (exit) 37C by the blades 30F that is rotating in high speed in the fan case 37.

The component case 34 in front of the outlet 37C is connected to the fan case 37 in an adhered manner. Since the air installation port is in an adhered manner and is in communication with the outlet 37C, air from the fan 30 is sent into the inside of the component case 34 through the outlet 37C so as to increase the inner pressure (static pressure). A portion of the cooling air that has been sent in is discharged from the first outlet 34A that is provided on the top side of the component case 34 on the side near to the outlet 37C.

The temperature of the discharged air is substantially the same as that of the air that has exited the outlet 37C since it has not cooled any high-temperature heating element or heat generating electric parts on the way and is still fresh air as it has been.

Further, the air for cooling that has been sent into the ventilation space 42F of the cooling duct from the first outlet 34A is blown out upwards from the blow out hole 42C, as indicated by arrow Y3 in Figs. 5 and 7, impinges on the bottom side of the right IH heating coil 6RC that is immediately above, and cools the coil effectively. Note that when the right IH heating coil 6RC is partially shaped with a space that allows air for cooling to penetrate therethrough as above, the cooling air from the first outlet 34A also penetrates through this space so as to cool the coil.

Meanwhile, the cooling air that has been sent into the component case 34 from the fan 30 with some pressure is not directed to the surface of the circuit board 41 and, also, does not flow near the surface. Since the cooling air flows mainly through the portion of the radiation fins 43A and 43B that is a structure protruding out to the surface (one side) of the circuit board 41 and through and between multiple heat exchanging fin elements, the radiation fins 43A and 43B are mainly cooled.

Further, among the cooling air that has been pushed out from the outlet 37C (arrow Y2 in Fig. 5), the main stream, which is the portion with the fastest velocity, flows out of the outlet 37C to the front in a straight line and is blown out from the second outlet 34B that is provided in the component case 34 in a position on the most downstream side of the cooling air, as indicated by arrow Y4 in Fig. 5. Since this second outlet 34B has an opening area that is a few times larger than that of the first outlet 34A, the greater part of the cooling air that has been pushed into the component case 34 from the outlet 37A is blown out from this second outlet 34B.

Furthermore, the cooling air that has been blown out is guided to the spaces 42G and 42H of the cooling duct and the greater part of the cooling air is blown out from the blow out holes 42C that is formed on the top side of the upper case 42A in plural numbers, as indicated by arrows Y4 and Y5, impinges on the bottom side of the right IH heating coil 6RC that is immediately above, and cools the coil effectively.

A portion of the cooling air that has been guided into the space 42H of the cooling duct is guided into the front component case 46 that houses each of the light emitting elements (LEDs) of the right heating power indicating lamp 101R and left heating power indicating lamp 101L that indicates by means of light various electrical/electronic components 56 and the heating power during induction heat cooking. Specifically, the cooling air of the fan 30 enters the ventilation space 42H of the cooling duct 42 from the second outlet 34B of the component case 34, passes through the vent hole 42H of the cooling duct 42 formed in correspondence with the ventilation space 42H, and enters the vent hole 46R or 46L of the lower duct 46A that is positioned so as to adhere immediately above the vent hole 42K.

With the above, the cooling air that has entered the front component case 46 first cools the liquid crystal display screens 45R and 45L from below, and, then, in the course of being discharged from the notch 46c into the upper portion component chamber 10 while flowing in the front component case 46, the built-in components and the like are sequentially cooled including sequentially cooling with the cooling air the light emitting elements of the right heating power indicating lamp 101R and left heating power indicating lamp 101L that indicates by means of light the liquid crystal display screens 45R and 45L, integrated display means 100, various electrical/electronic components 56, and the heating power during induction heat cooking.

In particular, since the cooling air that has been guided into the front component case 46 is not air that has cooled the left and right IH heating coils 6LC and 6RC that become high in temperature during the induction heating operation, even though with a small volume of cooling air, the liquid crystal display screens 45R and 45L and the integrated display means 100 are continuously cooled so as to effectively suppress the increase of temperature.

As shown in Figs. 2, 3, 5, and 6, the cooling air that has been blown out from multiple blow out holes 42C of the cooling duct 42 flows in the upper portion component chamber 10 towards the back as indicated by arrows Y5 and Y6. The flow of the cooling air merges with the cooling air that has been discharged from the notch 46C into the upper portion component chamber 10, flows into the rear exhaust hood 12, and is ultimately discharged from the rear exhaust hood 12.

### (Starting Cooking with Top Side Operating Unit)

Next, a case in which the top side operating unit 61 is used will be described.
Since the energization control circuit 200 is already activated and the driving circuit 215 of the liquid crystal display of the integrated display means 100 is pre-activated, input keys for selecting the heat sources are displayed on the liquid crystal display. Here, when an input key (either one of 143 to 145 will be the key) that selects the right IH heat source 6R among the above heat sources is pushed, the area of the area 100R (100R1 for heating power and 100R2 for time period) corresponding to the right IH heat source 6R of the liquid crystal display is automatically enlarged, and further, in this state, the input keys 142 to 145 are displayed with input functions switched so as to correspond to the situation, and by successively operating the displayed input keys, cooking conditions such as the type of cooking (also known as menu, for example, Tempura, boiling water, stew, keeping the food warm, etc.), the level of heating power, and the heating time are set.

Further, when at a stage in which the desired cooking conditions are set, the input key 146 displays characters "SET" as shown in Fig. 16. The inputting of the cooking conditions is set by touching this.

Furthermore, as described above, the energization control circuit 200 performs determination processing of the suitability of the pan. When it is determined that the pan (heated object N) is adaptable, the energization control circuit 200 carries out an energization control processing that automatically accommodates power so that the right IH heat source 6R exerts a predetermined heating power that the user has set. With this, the pan, which is the heated object N, becomes high in temperature by the high-frequency magnetic flux from the right IH heating coil 6RC, and thus enters an electromagnetic induction heat cooking operation (cooking mode).

### (Cooking with One-touch Setting)

In the right heating power setting operating unit 70, one-touch setting keys, each for a heating power, are provided that facilitates the setting of the heating power of the right IH heat source 6R with a push of a button by the user. Since three one-touch key are provided, namely, a low heating power key 91, a middle heating power key 92, and a high heating power key 93, without the operation of the input key of the integrated display means 100, the heating power can be input with one operation by pushing the low heating power key 91, the middle heating power key 92, the high heating power key 93, or the 3 kW key 94. Note that cooking using the left IH heat source 6L can be started with the same operation as above.

### (Starting Cooking with Grill Heating Chamber)

Next, a case in which the radiant type electric heat sources 22 and 23 of the grill heating chamber 9 are energized will be described. Cooking with this can be carried out while the right IH heat source 6R and the left IH heat source 6L are heat cooking; however, a limiting program is installed in the energization control circuit 200 so that cooking cannot be carried out with the radiant type central electric heat source 7 at the same time. This is because the above will exceed the limit of the rated power of the whole cooking system.

There are two ways to start various cooking in the grill heating chamber 9, which are using the input key displayed on the liquid crystal display of the integrated display means 100 in the top side operating unit 61 and pushing the operation button 95 for the radiant type electric heat sources 22 and 23.

In either way, various cooking is capable in the grill heating chamber 9 by energizing the radiant type electric heat sources 22 and 23 at the same time or separately. By receiving information from a temperature sensor 242 and a temperature control circuit 240, the energization control circuit 200 controls the energization of the radiant type electric heat sources 22 and 23 so that the ambient temperature inside the grill heating chamber 9 becomes a target temperature, which is set in the energization control circuit 200 in advance, and after an elapse of a predetermined time from the start of the cooking, notifies it (notification by means of display or a voice guide mechanism of the integrated display means 100), and ends the cooking.

Due to the heat cooking with the radiant type electric heat sources 22 and 23, hot air with high temperature is generated inside the grill heating chamber 9. Accordingly, the internal pressure of the grill heating chamber 9 naturally increases and air naturally ascends in the exhaust duct 14 from the outlet 9E at the back. In the course of the above, the odor component in the exhaust is decomposed by the deodorizing catalyst 121 that has become high in temperature with energization of the electric heater 121H for the catalyst by the heater driving circuit 214 for driving.

Meanwhile, since the auxiliary exhaust purpose axial flow fan 106 is provided midway of the exhaust duct 14, regarding the hot air that is ascending the exhaust duct 14, by operating the fan 106 and taking in air inside the main body A into the exhaust duct 14, as indicated by arrow Y7, the high-temperature air in the grill heating chamber 9 is induced to this fresh air and is exhausted, as indicated by arrow Y8, from the upper end opening 14A of the exhaust duct 14 while decreasing its temperature.

As above, with the exhaust stream from the upper end opening 14A of the exhaust duct 14, the air in the rear exhaust hood 12 adjacent to the upper end opening 14A is induced and discharged to the outside. That is, the air in the space 26 between the grill heating chamber 9 and the horizontal partition plate 25 and the air in the upper portion component chamber 10 in the main body are also discharged together through the rear exhaust hood 12.

Next, operation in a case in which the left IH heat source 6L is used in heat cooking will be described. Note that, same as the right IH heat source 6R, the left IH heat source 6L shifts to cooking mode after the abnormality monitoring processing before cooking has been completed and there are two ways to use the left IH heat source 6L, that is, to use the front side operating unit 61 and to use the top side operating unit 61. In the below description, description will be given from the stage in which energization to the left IH heating coil 6LC is started and cooking is started.

In the cooking system, when an elliptical or a rectangular pan (heated object N) that has a pan bottom diameter slightly larger than the maximum outer diameter DA of the main heating coil MC is used, the elliptical heated object N is heated with the main heating coil MC and can further be heated cooperatively with the sub heating coils SC1 to SC4.

For example, it is assumed that there is an elliptical pan (heated object N) that extends over both the main heating coil MC and a single sub heating coil SC2 that is on the left side of the main heating coil MC.

When such an elliptical pan (heated object N) is placed and heat cooking is started, the temperature of the elliptical pan (heated object N) increases. Both the infrared sensor 31L1 of the main heating coil MC and the infrared sensor 31 L3 of the sub heating coil SC2 detects a phenomenon indicating that the input of the ambient light (light of the indoor light and sunlight) is small compared to those of the other infrared sensors 31 L2, 31 L4, and 31 L5 and that the temperature is on the rise. Based on this information, the placement-of-heated-object determination unit 280 determines that an elliptical pan (heated object N) exists.

Further, basic information to determine whether the same single heated object is placed above is input to the placement-of-heated-object determination unit 280 from the current sensor 227 of the main heating coil MC and the current sensors 267A to 267D of each of the sub heating coils SC1 to SC4. By detecting the current change, the placement-of-heated-object determination unit 280 detects the impedance change of the main heating coil MC and the sub heating coils SC. The energization control circuit 200 generates a command signal to drive the inverter circuit MIV of the main heating coil MC on which the elliptical pan (heated object N) is placed and each inverter circuit SIV1 to SIV4 of the sub heating coils SC1 to SC4, distribute high-frequency current to either one or some of the four sub heating coils SC1 to SC4 that is placed with the elliptical pan (heated object N), and suppress or stop distributing high-frequency current to the other sub heating coils SC1 to SC4 that is not placed with the elliptical pan (heated object N).

When the placement-of-heated-object determination unit 280 determines that the same singular elliptical pan (heated object N) is placed above the main heating coil MC and a single sub heating coil SC2, the energization control circuit 200 operates only the main heating coil MC and the specific sub heating coil SC2 to work in association with each other and provides the high-frequency power to the two heating coils in a heating power rate set in advance from the respective inverter circuits MIV and SIV2. Here, the "heating power rate" is the energization control circuit 200 allocating, for example, when the user starts cooking with the left IH heat source 6L with a heating power of 2.5 kW, 2 kW to the main heating coil MC and 500 W to the sub heating coil SC2.

This sub heating coil SC2 cannot be driven alone to perform induction heat cooking and the other three sub heating coils SC1, SC3, and SC4 cannot perform induction heat cooking by itself or by combination. In other words, the characteristic is such that one or some of the four sub heating coils SC1, SC2, SC3, and SC4 that are disposed around the main heating coil are only heated and driven when the main heating coil MC is driven.

Further, when such cooperative heating is carried out, the energization control circuit 200 supplies high-frequency power from the dedicated inverter circuits MIV and SIV2 to the main heating coil MC and the specified sub heating coil SC2 in proportion with the heating power rate set in advance to carry out a heating operation. Based on this information, the energization control circuit 200 issues a driving command to the driving circuit 278 so that the individual light emitting unit 276 can specify the sub heating coil SC2 that is carrying out the cooperative heating. That is, the driving circuit 278 drives the individual light emitting unit 276 so that the individual light emitting unit 276 that is positioned on the outside of the sub heating coil SC2 is emitted and lighted. A predetermined light source (red lamp, LED, etc.) in the individual light emitting unit 276 is emitted and lighted and the yellow light source that had been emitted and lighted until then is turned off. Accordingly, the activated sub heating coil SC2 is displayed with a red light belt so as to be visible from above the top plate 21.

Note that the wide area light emitting unit 277 is driven by the driving circuit 278 from the stage in which the abnormality determination is completed after the activation of power by the user pushing the operation button 63A (see Fig. 2) of the main power switch 63 and is emitted and lighted in yellow first. Accordingly, it will be possible to guide the user the placing position from the stage in which the elliptical pan (heated object N) is placed above the left IH heat source 6L. At the stage in which the heating operation is started by supply of high-frequency power for heating to the main heating coil MC, the energization control circuit 200 changes the luminescent color of the wide area light emitting unit 277 (for example, changing the ones that were yellow to red). For example, the emitting and lighting of the yellow light source (lamp, LED, etc.) in the wide area light emitting unit 277 is stopped and, alternatively, the emitting and lighting of the red light source (lamp, LED, etc.) that is disposed next to the yellow light source may be started or a polychromatic light source (three color LED and the like) may be used to change the luminescent color.

Further, even when the elliptical pan (heated object N) is temporarily lifted or shifted to the left or right for a predetermined short time (a few seconds to about 10 seconds), the energization control circuit 200 maintains the heating operation and does not change the emitting and lighting status of the wide area light emitting unit 227 and keeps on displaying the preferable position to place the elliptical pan (heated object N) to the user. At this time, when the elliptical pan (heated object N) is kept lifted more than the predetermined short time, the placement-of-heated-object determination unit 280 determines that there is no elliptical pan (heated object N) and the energization control circuit 200 issues a command temporally reducing or stopping the heating power of the induction heating until the elliptical pan (heated object N) is placed once more. In this case, the preferable position to place the elliptical pan (heated object N) is continuously displayed to the user. The emitting and lighting state of the wide area light emitting unit 277 may be changed such that the emitting and the lighting color correspond to the heating power. For example, if the emitting and lighting is made to be orange in a state in which the heating power is reduced and if the emitting and lighting is made to be yellow in a state in which the heating power is stopped, along with the preferable position to place the heated object, it will be possible to notice the user the status of the heating power.

Further, when the elliptical pan (heated object N) is shifted to the right, for example, the placement-of-heated-object determination unit 280 determines that the same singular elliptical pan (heated object N) is placed above the main heating coil MC and the sub heating coil SC1 on the right side, and the energization control circuit 200 operates only the main heating coil MC and the specific sub heating coil SC1 to work in association with each other and provides the high-frequency power to the two heating coils in a heating power rate set in advance from respective inverter circuits MIV and SIV1. Furthermore, the energization to the sub heating coil SC2 on the left side is stopped and, thus, cooking is continued as is with the "heating power" that has been exerted.

Additionally, since the sub heating coil SC2 has stopped contributing to the cooperative heating and, alternatively, a different sub heating coil SC1 is added to the cooperative heating operation, a high-frequency power is supplied to the dedicated inverter circuit SIV1. On the basis of this switching information, the energization control circuit 200 issues a driving command to the driving circuit 278 so that the individual light emitting unit 276 can specify the sub heating coil SC1 that is carrying out the cooperative heating. That is, the driving circuit 278 drives the individual light emitting unit 276 such that the individual light emitting unit 276 on the outside position (right side in Fig. 9) of the relevant sub heating coil SC1 alone is emitted and lighted. Accordingly, the light source (red lamp, LED, etc.) in the individual light emitting unit 276 is emitted and lighted and the yellow light source that has been emitted and lighted until then is turned off.

Note that the direction of the high-frequency current IA flowing in the main heating coil MC and the high-frequency current IB flowing in each of the sub heating coils SC1 to SC4 are preferably the same (Fig. 11 illustrates a case in which they are in agreement in the counterclockwise direction) from the view point of heating efficiency. This is because, in a case in which the main heating coil MC and the sub heating coils SC1 to SC4 are disposed close to each other, the alternating magnetic fields generated by the coils interfere with each other in a certain adjacent area and as a result restricts the size of the current of the pan (the current flowing in the heated object N) generated by the main heating coil MC and the sub heating coils SC1 to SC4 from becoming large and arises concern that the calorific value that becomes large proportional to the square of this current of the pan is curbed.

### Embodiment 2

Fig. 19 illustrates an induction cooking system according to Embodiment 2 and illustrates an enlarged longitudinal sectional view of the main heating coil of the left side induction heating source and its peripheral area of the induction cooking system. Note that portions identical or corresponding to the configuration of Embodiment 1 are referred to with the same reference numerals.

In Embodiment 2, while the cooling duct 42 positioned below the coil support 290 has multiple blow out holes 42C formed in the portion facing the main heating coil MC and the sub heating coils SC1 to SC4, the cooling duct 42 is configured such that cooling air is provided from the right IH heat source side. A through hole 310 for blowing out cooling air towards the lower portion of the lateral side of each individual light emitting unit 276 is formed on the side wall of the cooling duct 42.

Further, an annular cooperative heating area mark EM is formed on the top plate 21 by means of printing or the like and light from the individual light emitting units 276 are radiated upwards from positions that are in the vicinity of the inside of the cooperative heating area mark EM. Furthermore, light of the wide area light emitting unit 277 is emitted upwards from a position that is in the vicinity of the outside of the cooperative heating area mark EM.

With such a configuration as above, when cooperative heating is carried out by cooperation of the main heating coil MC and the sub heating coils SC1 to SC4, in order to specify the sub heating coil SC2 that is performing cooperative heating operation with the individual light emitting unit 276, emitting and lighting of the individual light emitting unit 276 that is located outside of the sub heating coil SC2 is carried out and, accordingly, the driving circuit 278 is driven (the light source is emitted and lighted). Note that since the wide area light emitting unit 277 is driven by the driving circuit 278 from the stage in which the user activates power by pushing the operation button 63A (see Fig. 2) of the main power switch 63, it will be possible to guide the user the placing position from the stage in which the elliptical pan (heated object N) is placed above the left IH heat source 6L. Further, even when the elliptical pan (heated object N) is temporarily lifted or shifted to the left or right, the emitting and lighting status of the wide area light emitting unit 227 does not change and is kept to display the preferable position to place the elliptical pan (heated object N) to the user.

Further, in Embodiment 2, cooling air Y4 passes through the spaces 272 formed in the middle of the sub heating coils SC1 to SC4 from the cooling duct 42 positioned below the coil support 290 cooling the sub heating coils SC1 to SC4 from the inside. Meanwhile, a portion of the cooling air Y4 is blown out towards the lower portion of the lateral side of each individual light emitting unit 276. The individual light emitting units 276 and the wide area light emitting unit 277, whose light guides are formed of plastic, are cooled by the cooling air that has been blown out from the through holes 310, and, hence, their thermal degradation and deformation can be prevented.

### Embodiment 3

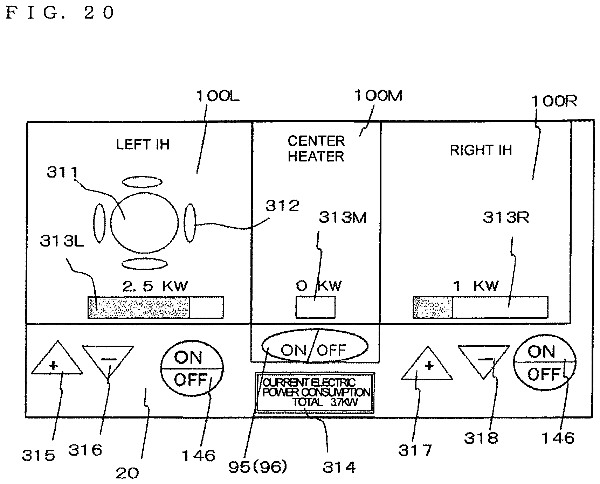

Fig. 20 illustrates an induction cooking system according to Embodiment 3 and is a plan view illustrating integral display means of the induction cooking system. Note that portions identical or corresponding to the configuration of Embodiments 1 and 2 are referred to with the same reference numerals.

A first characteristic of Embodiment 3 is that schematic figures are displayed on the liquid crystal screen of the integrated display means 100 in the area 100L corresponding to the left IH heat source 6L to indicate to the user that the main heating coil MC and the four sub heating coils SC1 to SC4 are carrying out cooperative heating.

That is, when the left IH heat source 6L is used, figure 311 schematically displaying the main heating coil MC and figures 312 schematically displaying the sub heating coils SC1 to SC4 are displayed in the area 100L corresponding to a predetermined area provided in the liquid crystal screen of the integrated display means 100. When using the left IH heat source 6L, figure 311 of the main heating coil MC and four figures 312 schematically displaying all of the sub heating coils SC1 to SC4 are all displayed at the same time. When heat cooking is started, the figure 312 of one or some of the sub heating coils SC1 to SC4 that is actually contributing to the cooperative heating can be changed to a different color, be made to flash, and the like, and, thus, the user can be notified. Accordingly, even when portion of the individual light emitting unit 276 cannot be easily seen (much of this happens on the back side of the pan) by the user due to the placement of the pan (heated object N), clear visual conformation on which of the sub heating coils SC1 to SC4 is actually involved in cooperative heating can be made in the area 100L corresponding to the left IH heat source 6L in the integrated display means 100.

Further, in Embodiment 3, three display units 313L, 313M, and 313R, which display power consumption of each of the used heat source with a numerical value and a graph, appear on the display screen of the integrated display means 100.

Further, a second characteristic is that a display window 314 displaying the entire power consumption with a numerical value is disposed on the front side of the integrated display means 100 in the center position in the left and right of the main body upper frame 20.

In Fig. 20, "315" and "316" are a pair of input keys for setting the heating power of the left IH heat source 6L and is constituted by an adding key 315 that sets the heating power a level higher with each pushing of the key and a subtracting key 316 that sets the heating power a level lower with each pushing of the key.

Similarly, "317" and "318" are a pair of input keys for setting the heating power of the right IH heat source 6R and is constituted by an adding key 317 that sets the heating power a level higher with each pushing of the key and a subtracting key 318 that sets the heating power a level lower with each pushing of the key.

As configured as above, similar to Embodiment 2, when cooperative heating is carried out by cooperation of the main heating coil MC and the sub heating coils SC1 to SC4, the individual light emitting unit 276 specifies the sub heating coil SC2 that is performing the cooperative heating operation, and irrespective of which of the sub heating coils SC1 to SC4 is preforming cooperative heating, the wide area light emitting unit 277 keeps on displaying the placing position of the pan (heated object N) on the top plate 21 at all times.

### Embodiment 4

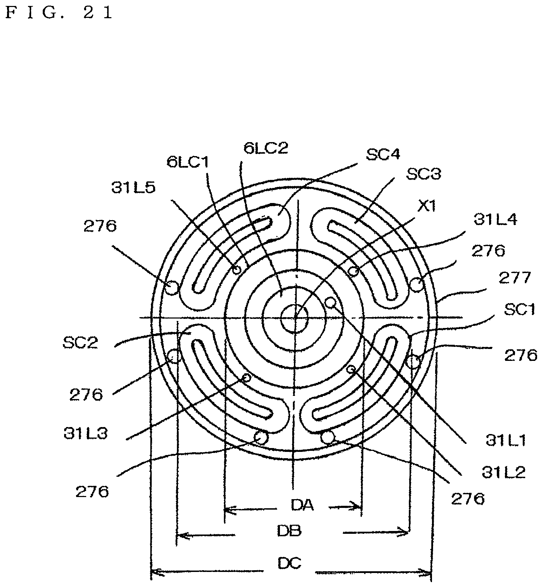

Fig. 21 illustrates an induction cooking system according to Embodiment 4 and is a plan view illustrating the left side induction heating source of the induction cooking system. Note that portions identical or corresponding to each configuration of Embodiments 1 to 3 are referred to with the same reference numerals.

In Embodiment 4, the individual light emitting units 276 are not lengthy provided along the outer circumference of the sub heating coils SC1 to SC4 but display is performed by emitting and lighting a section(s) in one or two locations.

That is, as shown in Fig. 20, the individual light emitting units 276 are each provided to a position close to the two ends of the coil as for the two sub heating coils SC1 and SC2 that are close to the user side and the individual light emitting unit 276 is provided to a position close to the front end of the coil as for the two sub heating coils SC3 and SC4 that are far from (on the back side) the user side.

As configured as above, similar to Embodiments 1 to 3, when cooperative heating is carried out by cooperation of the main heating coil MC and the sub heating coils SC1 to SC4, the individual light emitting unit 276 specifies the sub heating coil SC2 that is performing the cooperative heating operation, and irrespective of which of the sub heating coils SC1 to SC4 is preforming cooperative heating, the wide area light emitting unit 277 keeps on displaying the preferable placing position of the pan (heated object N) on the top plate 21 at all times.

Note that as regards the two sub heating coils SC3 and SC4 that are far from (on the back side) the user side, the reason for not providing the individual light emitting unit 276 to a position close to the rear end of each coil is out of consideration that it will not be easy to visually observe the individual light emitting unit 276 behind the placed pan (heated object N). Although the above has an advantage of reducing cost, there will be no problem in providing the individual light emitting unit to the rear position.

### Embodiment 5

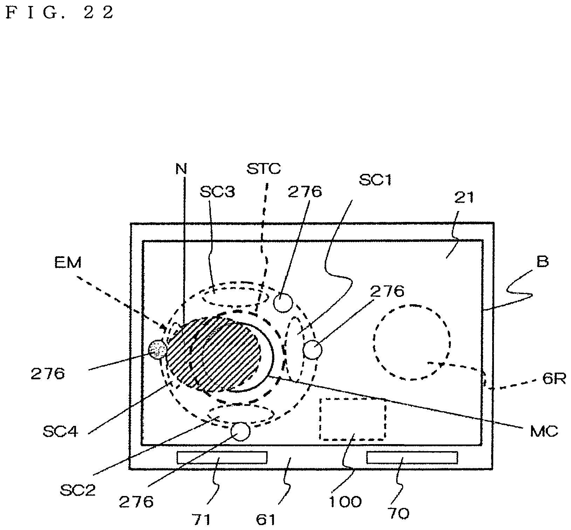

Fig. 22 illustrates an induction cooking system according to Embodiment 5 and is a plan view illustrating the entirety of the induction cooking system. Note that portions identical or corresponding to each configuration of Embodiments 1 to 4 are referred to with the same reference numerals.

In Embodiment 5, the individual light emitting units 276 are not lengthy provided along the outer circumference of the sub heating coils SC1 to SC4 but is provided at four locations on a concentric circle with the wide area light emitting unit 277. "STC" is a center light emitting unit (main heating coil light emitting unit) disposed under the top plate 21 so as to surround the circumference of the main heating coil MC, indicates an outer edge position of the area substantially corresponding to the heating region of the main coil MC, and is annularly provided near a position immediately below the guide mark 6LM illustrated in Figs. 1 and 3 of Embodiment 1.

Further, the individual light emitting units 276 are made to change the color of the radiated light depending on whether in cooperative heating or not.

As configured as above, similar to Embodiments 1 to 4, when cooperative heating is carried out by cooperation of the main heating coil MC and the sub heating coils SC1 to SC4, the emitting and the lighting color of the individual light emitting unit 276 are changed so as to specify the sub heating coil SC2 that is performing the cooperative heating operation and to notify this sub heating coil to the user.

For example, as shown in Fig. 22, in a case in which the heating operation is started with an elliptical pan (heated object N) placed above the main heating coil MC and the sub heating coil SC4 on the left side so as to extend over the two, based on the determination result of the placement-of-heated-object determination unit 280, the energization control circuit 200 determines that a same single elliptical pan (heated object N) exists above the main heating coil MC and the sub heating coil SC4 on the left side and drives the inverter circuit MIV for the main heating coil and the inverter circuit SIV4 for the sub heating coil such that high-frequency power is supplied to the two coils with a predetermined heating power allocation.

In this case, only the individual light emitting unit 276 that is in the left vicinity of the inverter circuit SIV4 for the sub heating coil is emitted and lighted in a different emission of light, lighting color, and lighting form to the other individual light emitting units 276. For example, when not performing cooperative heating, the emission of light and the lighting color of the individual light emitting unit 276 are "yellow" when seen from above the top plate 21, but when performing cooperative heating, it is changed to "red".

Note that since in Embodiment 5, the center light emitting unit (main heating coil light emitting unit) STC that indicates the outer edge position of the area substantially corresponding to the heating region of the main coil MC is provided so that the preferable placing position of the heated object N such as a pan is indicated in a more clear manner when heating with the main heating coil MC alone, when using a normal-sized round pan (heated object N) that matches the outer diameter of the main heating coil MC, the center position of the main heating coil MC and its preferable placing position can be easily understood by visual confirmation.

Further, in Embodiment 5, although the center light emitting unit (main heating coil light emitting unit) STC performs emitting and lighting operation before the start of the cooperative heating operation of the main heating coil MC and the sub heating coils SC1 to SC4 and continues the emitting and lighting of the main heating coil and the sub heating coils during cooperative heating, the center light emitting unit STC may be turned off during cooperative heating of the main heating coil MC and the sub heating coils SC1 to SC4. This is because the user can imagine the rough position of the center light emitting unit (main heating coil light emitting unit) STC by looking at the emitting and lighting of the individual light emitting units 276 and can understand that the positions of the individual light emitting units 276, which agrees with the position of the cooperative heating area mark EM, are the outer limit, and therefore can easily understand that the moving-away (opposite) direction with respect to the individual light emitting unit 276, that is, the main coil center point X1 direction, is the center of the preferable heating area.

Embodiment 6 of the invention will be described.

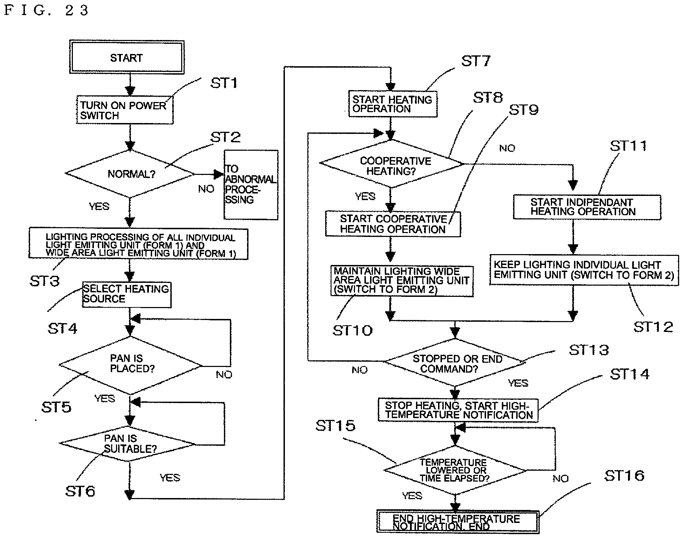

Fig. 23 is a flowchart of the control operation of a cooking system according to Embodiment 6 of the invention. The control program in this flowchart is stored in the storage unit 203 that is inside the energization control circuit 200. Note that the basic structure is similar to that of Embodiments 1 to 5. Referring to Fig. 23, when starting cooking, first, the operation button 63A of the main power switch 63 provided in the front side operating unit 60 of the main body A of the cooking system is pushed and turned on (step 1, hereinafter, "step" will be abbreviated as "ST").

Accordingly, electric power of a predetermined voltage is supplied to the energization control circuit 200, and the energization control circuit 200 itself checks whether there is any abnormality in the entire cooking system.

Then, if no abnormality is detected in the result of the abnormality determination processing (ST2), the process proceeds to ST3. On the other hand, if abnormality is detected, the process proceeds to a predetermined abnormal processing and, ultimately, the energization circuit 200 itself turns the electric power off and stops.

When the process proceeds to ST3, all of the individual light emitting units 276 and the wide area light emitting unit 277 are emitted and lighted at the same time. Alternatively, either one of the individual light emitting units 276 and the wide area light emitting unit 277 is first emitted and lighted, then, a different light emitting unit is emitted and lighted, and thus, by gradually increasing the number of light emitting units, all of the individual light emitting units 276 and the wide area light emitting unit 277 are emitted and lighted. Then, in the above state in which all of the individual light emitting units 276 and the wide area light emitting unit 277 are emitted and lighted, a command from the user is awaited. Note that all of the individual light emitting units 276 and the wide area light emitting unit 277 are in a state in which yellow light is continuously emitted.

Next, as described in Embodiment 1, in a case in which there are IH heat sources 6L and 6R on the left and right, respectively, when the user selects either one of them with the front side operating unit 60 or the top side operating unit 61 (ST4), then detection is carried out whether there is a pan (heated object N) on the selected coil. This detection is carried out by the placement-of-heated-object determination unit 280.

After determination of the placement of the pan (heated object N) is carried out in ST5, determination of whether the pan (heated object N) is suitable for induction heating is carried out. This determination is carried out by the placement-of-heated-object determination unit 280. A pan (heated object N) that has an insufficiently small diameter or a pan (heated object N) whose bottom side is largely deformed, curved, or the like can be distinguished by its electrical characteristic difference.

The determination processing of whether the pan (heated object N) is suitable is carried out in ST6, and if suitable, the process proceeds to ST7 which is a heating operation starting step. Further, if unsuitable, since the display means such as the integrated display means 100 is already operating at this stage, display indicating that the pan (heated object N) is unsuitable may be displayed on the display means along with notification by means of the synthetic speech device or the like at the same time. As above, when either one of the left and right IH heat sources 6L and 6R is selected, there is no need to issue a new cooking start command with the input key, the dial, or the operation button.

A case in which the left IH heat source 6L is selected will be described below.

When the heating operation is started in ST7, induction heating is carried out with the main heating coil MC and the sub heating coils SC1 to SC4 that constitute the left IH heat source 6L. In ST5, detection has been carried out whether the pan (heated object N) is only on the main heating coil MC and, further, on which sub heating coils SC1 to SC4 the pan is placed. If only on the main heating coil MC, it will be induction heating with the main heating coil alone, and if the same pan (heated object N) is also on at least one of the sub heating coils SC1 to SC4, it will be cooperative heating. The above determination processing is carried out in ST8.

In the case of cooperative heating, cooperative heating is started by supplying high-frequency current to the sub heating coils SC1 to SC4 involved in the heating and the main heating coil MC from the corresponding inverter circuits MIV and SIV1 to SIV4 (ST9). Then, the light emitting form of the wide area light emitting unit 277 changes from a state in which yellow light is emitted and lighted to a state in which red light is emitted and lighted (ST10). Note that the change may be such that while the same color as ST3 is emitted and lighted, the emitting and lighting is performed in an intermittent manner so that it looks as if it is flashing to the user or may be such that the brightness of the emitting and lighting is increased. Either corresponds to "changing the form" and "switching" of the invention.

Note that other than continuing the emitting and lighting state of the wide area light emitting unit 277, as shown in Fig. 11, the individual light emitting unit 276 provided to each of the sub heating coils SC1 to SC4 may simultaneously be emitted and lighted, for example, so that the user can visually specify the sub heating coils SC1 to SC4 that are involved in the cooperative heating.

Further, the processes ST8 to ST 10 are repeated until there is a heat-cooking stop command from the user. Even if the sub heating coil SC1 on the right side is temporarily involved in the cooperative heating, there are cases in which the placed position of the pan (heated object N) is changed by unintentional or intentional slight shifting of the pan (heated object N) in all directions by the user during cooking. Hence, in ST8 that is the cooperative heating determination step, the processing of specifying the sub heating coils SC1 to SC4 that is to be actually driven is carried out at all times by the energization control circuit 200 obtaining information of the placement-of-heated-object determination unit 280 and the temperature sensors 31 L1 to 31 L5.

On the other hand, when it is determined that it is not cooperative heating in ST8, high-frequency current is supplied from the inverter circuit MIV to the main heating coil MC and independent heating is started (ST11). Then, corresponding to the main heating coil MC that is involved in the independent heating, light emitting form of the individual light emitting unit 276 that radiates light to the outer circumferential edge of the heating area is changed from the state in which yellow light is emitted and lighted to the state in which red light is emitted and lighted (ST12). Note that the change may be such that while the same color as ST3 is emitted and lighted, the emitting and lighting is performed in an intermittent manner so that it looks as if it is flashing to the user or may be such that the brightness of the emitting is increased. Either corresponds to "changing the form" and "switching" of the invention. Note that other than continuing the emitting and lighting state of the individual light emitting units 276, the emitting and lighting of the wide area light emitting unit 277 may be continued but also may be turned off. Then the process proceeds to step 13.

Subsequently, when a heat-cooking stop command is sent from the user or when it is determined by the energization control circuit 200 that a certain set time has elapsed (time up) during cooking with the timer, the energization control circuit 200 stops the energization of the main heating coil MC and all of the sub heating coils SC to SC4 that has been heat driven at that time. Further, in order to alert that the temperature of the top plate 21 is high, a high-temperature notifying operation is started by means of flashing all of the wide area light emitting unit 277 and the individual light emitting units 276 in red (ST14).

The high-temperature notifying operation is continued after the energization of the main heating coil MC and the sub heating coils SC1 to SC4 are stopped until a certain time that has been set in advance elapses or until the detection temperature data from the temperature detecting circuit 240 indicates that the temperature of the top plate 21 has dropped to, for example, 50 degrees C. The above determination of the temperature drop or elapse of time is performed in ST15 and if the high-temperature notifying condition is satisfied, the high-temperature notification is ended and the operation of the cooking system is completed (subsequently, the electric power switch is automatically tuned off).

Note that synchronizing with the start of the high-temperature notifying operation (ST14), warning text "Do not touch the top plate, the top plate is still high in temperature" or a figure indicating this is displayed on the liquid crystal screen of the integrated display means 100. Note that in the vicinity and neighbor of the integrated display means 100, a separate display may be provided that displays with LEDs characters "Caution High Temperature" that stand out on the top plate 21, and this may further notify the high temperature.

As configured as above, in Embodiment 6, after the start of energization of the heating coil and before the induction heating operation substantially starts, it is possible to inform the user all of the heating region by means of emitting and lighting of the individual light emitting units 276 and the wide area light emitting unit 277. Then, since the emitting and lighting state of the individual light emitting units 276 and the wide area light emitting unit 277 can be visually confirmed by the user, after the selection of the heat source and the start of the heating operation, even in the preparation state before placing the pan (heated object N), the optimum position to place the pan (heated object N) can be understood, and thus provides the user with high usability.

Further, since the high-temperature notification is performed by using the individual light emitting units 276 and the wide area light emitting unit 277, a cooker with high safety can be provided without increasing the parts count.

Note that in the above-described Embodiment 1, although it has been assumed that during induction heating of the left IH heating coil 6LC, only the fan 30 of the left cooling chamber 8L is operated and the fan 30 of the right cooling chamber 8R is not operated, depending on the used state of the cooking system (cases such as the left and right IH heating coils 6LC and 6RC were driven simultaneously immediately before or when the radiant type central electric heat source 7 or the grill heating chamber 9 is used) and depending on the environment such as the temperature of the upper portion component housing chamber 10, each fan 30 of the left and right cooling chambers 8L and 8R may be operated at the same time. Further, the operation speeds (fan capacities) of each of the left and right fans 30 are not always the same and either one or both may be changed as appropriate in accordance with the used state of the cooking system.

Furthermore, the outer dimensions of the left and right cooling units CU do not necessarily have to be the same and the dimensions of each of the fans 30, the rotating blades 30F, the motors 300, the fan cases 37, and the component cases 34 may be changed as appropriate in accordance with the calorific value and the size of the subject to be heated (induction heating coil and the like). However, if the maximum heating power of each of the left and right IH heating sources 6L and 6R are equal, it is preferable that the sizes and specifications of the components of the two cooling units CU are made common to the extent possible so as to reduce production cost and improve ease of assembly. Changing, such as the disposition of the cooling unit CU to either one side in the left or right, has no relation to the purport of the invention.

Furthermore, the vertical partition plates 24R and 24L and the horizontal partition plate 25 are not necessarily required to embody the invention. For example, a matter of course, the outer walls of the grill heating chamber 9 may be covered with a heat insulating material. If a sufficient gap can be provided with the outer walls of the grill heating chamber 9 or if the temperature of the gap can be kept low (for example, with free convection or forced convection of air), these partition plates 24 and 25 and the heat insulating material may be omitted. Further, among the outer wall of the cooling unit CU itself, a heat shield panel may be mounted or a heat insulating film may be formed on the side facing the outer wall of the grill heating chamber 9. This will enable the facing gap with the outer wall of the grill heating chamber 9 to be minimum, and if assuming that the width of the main body A is the same, the width of the grill heating chamber 9 can be made larger in proportion.

Further, in the above Embodiment 1, the integrated display means 100 is capable of displaying the operation condition of the four heat sources, namely, the left IH heating coil 6LC, the right IH heating coil 6RC, the radiant type central electric heat source (heater) 7, the radiant type electric heat sources (heaters) 22 and 23 individually or in multiple numbers at the same time, command the start or stop of the heating operation with the touch operation of the input keys 141 to 145, and set the energizing conditions. However, the integrated display means 100 may be one limited to a display function without the above input function to the energization control circuit 200.

Furthermore, the placement-of-heated-object determination unit 280 that determines whether the same single pan (heated object N) is placed above the main heating coil MC and the sub heating coils SC1 to SC4 may use, as described in the above Embodiments, infrared sensors 31 that detect temperatures or current detection sensors 227 that detect the current flowing in the heating coils, as well as means that optically detect whether there is a pan (heated object N) above the sensor. For example, if there is a pan (heated object N) above the top plate 21, light from the lighting equipment on the kitchen ceiling or the sun will not enter the top plate 21, but if there is no pan (heated object N) above the top plate 21, ambient light such as light of the lighting equipment or light of the sun will enter the top plate 21. It may be one that detects the difference. Additionally, as methods of determining the material properties of the pan (heated object N) other than the method in which the material properties of the pan (heated object N) is determined on the basis of the current flowing in the heating coil and the input current flowing in the inverter circuit, for example, ones using other electrical characteristics can be considered such as a method in which the material properties of the pan (heated object N) is determined on the basis of the voltage flowing in the heating coil and the input voltage flowing in the inverter circuit.

### [Industrial Applicability]

The induction cooking system of the invention allows visual confirmation of the sub heating coil(s) that is heated and driven in cooperation with the main heating coil during heating, and the user can recognize the placing position of the pan and the like that is suitable for the cooperative heating of the main heating coil and the sub heating coil(s) in the course of cooking. As such, the induction cooking system can be applied widely to table-top type and built-in type special purpose cooking systems for induction heated heat source and complex cooking systems with other radiant type heat sources.

### Reference Signs List

A main body; B top plate; C housing; D heating means; E operation means; F control means; G display means; W width; AM active mark; CU cooling unit; DA outer diameter of left IH heating coil; DB arrangement outer diameter of auxiliary coil; DC maximum outer diameter of wide display; KT kitchen furniture; K1 installation opening; KTK opening; N heated object (pan); SC sub heating coil; MC main heating coil; MIV inverter circuit for main heating coil; SIV1 to SIV4 inverter circuit for sub heating coil; SX space; STC center light emitting unit (main heating coil light emitting unit); 2 main body case; 2A body; 2B front flange plate; 2S inclined portion; 2U rear side wall of body; 3B rear flange; 3L left flange; 3R right flange; 6L left IH heat source; 6LC left IH heating coil; 6LM guide mark; 6R right IH heat source; 6RC right IH heating coil; 6RM guide mark; 7 radiant type central electric heat source (heater); 7M guide mark; 8L left cooling chamber; 8R right cooling chamber; 9 grill heating chamber; 9A front opening; 9B rear opening; 9C inner frame; 9D outer frame; 9E outlet; 10 upper portion component chamber; 12 rear exhaust hood; 13 door; 13A center opening; 13B handle; 14 exhaust duct; 14A upper end opening; 14B cylindrical bottom portion 14C vent hole; 20 upper frame (frame body); 20B right vent hole; 20C center vent hole; 20D left vent hole; 21 top plate; 22 radiant type electric heat source (heater); 23 radiant type electric heat source (heater); 24A notch; 24L left vertical partition plate; 24R right vertical partition plate; 25 horizontal partition plate; 26 space; 28 rear partition plate; 28A outlet; 30 fan; 30F blade; 31R infrared sensor; 31L infrared sensor; 32 rotation shaft; 33 motor driving circuit; 34 component case; 34A first outlet; 34B second outlet; 37 fan case; 37A suction tube; 37B suction; 37C outlet (exit); 37D case; 37E case; 39 fan chamber; 41 circuit board; 42 cooling duct; 42A upper case; 42B lower case; 42C blow out hole; 42D partition wall; 42E partition wall; 42F ventilating space; 42G ventilating space; 42H ventilating space; 42J communicating hole (aperture); 42K vent hole; 43A radiation fin; 43B radiation fin; 45R liquid crystal display screen; 45L liquid crystal display screen; 46 component case; 46A lower duct; 46B upper duct; 46C notch; 50 vessel-shaped cover; 56 mounting substrate; 57 electrical and electronic components; 60 front side operating unit; 61 top side operating unit; 62L left front side operating frame; 62R right front side operating frame; 63 main power switch; 63A operation button; 64R right operation dial; 64L left operation dial; 66R right indicating lamp; 66L left indicating lamp; 70 right heating power setting operating unit; 71 left heating power setting operating unit; 72 center operating unit; 73 magnetic flux leakage prevention material; 90 one-touch setting key; 91 low heating power key; 92 middle heating power key; 93 high heating power key; 94 high heating power key; 95 operation button for radiant type electric heat sources 22 and 23; 96 operation button for stop operation switch; 97A operation button for temperature control switch; 97B operation button for temperature control switch; 98 power on/off switching button; 99A configuration switch; 99B configuration switch; 100 integrated display means; 100L1 area corresponding to left IH heat source 6L; 100L2 area corresponding to left IH heat source 6L; 100M1 area corresponding to radiant type central electric heat source 7; 100M2 area corresponding to radiant type central electric heat source 7; 100R1 area corresponding to right IH heat source 6R; 100R2 area corresponding to right IH heat source 6R; 100G cooking area of grill heating chamber 9; 100GD guiding area; 100F key display area; 100N free display area; 101R right heating power indicating lamp; 101L left heating power indicating lamp; 106 fan; 106A rotor blade; 106B drive motor; 108 saucer; 109 grill; 113 gap; 114 gap; 115 gap; 116 gap; 121 deodorizing catalyst; 121H electric heater for catalyst; 130 convenient menu key; 131R right IH convenient menu button; 141 input key; 142 input key; 143 input key; 144 input key; 145 input key; 146 input key; 200 energization control circuit; 201 input unit; 202 output unit; 203 storage unit; 204 arithmetic control unit (CPU); 210R inverter circuit for right IH heat source; 210L inverter circuit for left IH heat source; 211 heater driving circuit of radiant type central electric heat source 7; 212 heater driving circuit for driving radiant type electric heat source for heating grill heating chamber 9; 213 heater drive circuit for driving radiation electric heat source 23 for in-chamber heating grill heating chamber 9; 214 heater driving circuit for driving a catalytic heater 121H; 215 driving circuit for driving liquid crystal screen of integrated display means 100; 221 rectifier bridge circuit; 222 coil; 223 smoothing capacitor; 224 resonance capacitor; 225 switching means (IGBT); 226 flywheel diode; 227 current detection sensor; 228 driving circuit; 231 driving circuit; 240 temperature detecting circuit; 241 temperature detecting element (temperature sensor); 242 temperature detecting element (in-chamber temperature sensor); 243 temperature detecting element (temperature sensor); 244 temperature detecting element (temperature sensor); 245 temperature detecting element (temperature sensor); 250 key dedicated for bread; 251 compound cooking key; 260 to 264 driving circuit; 267A current sensor; 267B current sensor; 267C current sensor; 267D current sensor; 270 to 275 space; 276 individual light emitting unit; 277 wide area light emitting unit; 278 driving circuit; 280 placement-of-heated-object determination unit; 290 coil support; 290A support protrusion; 291 shielding ring; 300 drive motor; 307 space; 310 through hole; 311 figure of main heating coil; 312 figure of sub heating coil; 313L left display unit; 313M center display unit; 313R right display unit; 314 display window.

## Claims

1. An induction cooking system, comprising:
a top plate (B, 21) being made of a material that allows penetration of light;
a plurality of adjoining heating coils being provided under the top plate (B, 21), the heating coils performing induction heating a heated object placed on the top plate (B, 21);
inverter circuits supplying high-frequency current to each of the heating coils;
an operating unit (E) for performing an input operation of a command related to heating control of the heated object;
an individual light emitting unit (276) being provided in a vicinity of an outer circumference of each coil, each individual light emitting unit (276) displaying a heating area of a single heating coil;
a wide area light emitting unit (277) displaying a heating area to be cooperatively heated by two or more coils that have different center locations and that are adjoining each other;
a placement-of-heated-object determination unit (280) detecting a state in which a same single heated object is placed on the two or more coils that have different center locations and that are adjoining each other;
an energization control circuit (200) being input with an operating signal from the operating unit (E) and detection information from the placement-of-heated-object determination unit (280), the energization control circuit (200) controlling an emitting and lighting state of the individual light emitting units (276) and the wide area light emitting unit (277) and controlling output of the inverter circuits; and
a power switch supplying power to the energization control circuit (200), wherein
the energization control circuit (200) emits and lights all of the individual light emitting units (276) and the wide area light emitting unit (277) at the same time or in sequence as an awaiting state when in a stage in which the power switch is turned on and before a predetermined heating start command or a command specifying a heat source to be used is received from the operating unit (E) by a user operation,
in a state in which a heating start command from the operating unit (E) has been received and a single heated object is heated by a single one of the heating coils, the individual light emitting unit (276) provided in the vicinity of the outer circumference of the relevant heating coil is set to an emitting and lighting state changed from the awaiting state, and
when the placement-of-heated-object determination unit (280) determines a state in which a same heated object is placed on two or more adjoining heating coils, the adjoining the two or more heating coils below the heated object are cooperatively driven for heating and the wide area light emitting unit (277) provided so as to surround the cooperative heating area is set to an emitting and lighting state changed from the awaiting state.

2. The induction cooking system of claim 1 , wherein
the heating coil corresponding to the wide area light emitting unit (277) is constituted by the annular main heating coil (MC) disposed in the center portion and the sub heating coils (SC) that are disposed adjacent to the main heating coil (MC) so as to surround the main heating coil (MC),
in a state in which a single main heating coil (MC) is performing the cooperative heating operation, electric power for heating one or more of the sub heating coils (SC) other than one or more of the sub heating coils (SC) that are performing the cooperative heating operation is stopped or limited by the energization control circuit (200).

3. The induction cooking system of claim 1 , wherein a display screen that displays an operation input result is disposed in the operating unit (E) or in the vicinity of the operating unit (E), and in the cooperative heating state, the heating state is displayed on the display screen by display means including a character or a figure.

4. The induction cooking system of claim 1, wherein when the top plate (B, 21) is in a high-temperature state, a second high-temperature display unit displaying that the top plate (B, 21) is in the high-temperature state by means of a character, a symbol, or light is provided.

## Patentansprüche

1. Ein Induktionskochsystem umfassend:
eine obere Platte (B, 21), die aus einem Material hergestellt ist, das ein Durchdringen von Licht erlaubt;
eine Mehrzahl von angrenzenden Heizspulen, die unter der oberen Platte (B, 21) vorgesehen sind, wobei die Heizspulen ein Induktionserwärmen von einem Erhitzungsobjekt, das auf der oberen Platte (B, 21) platziert ist, durchführen;
Wechselrichterkreise, die zu jeder der Heizspulen Hochfrequenzstrom liefern;
eine Betriebseinheit (E) zum Durchführen eines Eingabevorgangs von einem Befehl bezogen auf eine Erwärmsteuerung des Erhitzungsobjekts;
eine Einzel-Lichtemissionseinheit (276), vorgesehen in einer Umgebung eines äußeren Umfangs von jeder Spule, wobei jede Einzel-Lichtemissionseinheit (276) einen Erwärmbereich einer einzelnen Heizspule anzeigt;
eine Großbereich-Lichtemissionseinheit (277), anzeigend einen Erwärmbereich, der zusammenwirkend zu erhitzen ist durch zwei oder mehr Spulen, die unterschiedliche Mitte-Orte aufweisen und die an einander angrenzen;
eine Platzierung-des-Erhitzungsobjekts-Bestimmungseinheit (280) zum Detektieren eines Zustands, in welchem ein gleiches einzelnes Erhitzungsobjekt auf den zwei oder mehr Spulen, die unterschiedliche Mitte-Orte aufweisen und die aneinander angrenzen, platziert ist;
ein Energiezuführsteuerkreis (200), der versorgt wird mit einem Betriebssignal von der Betriebseinheit (E) und mit Detektionsinformationen von der Platzierung-des-Erhitzungsobjekts-Bestimmungseinheit (280), wobei der Energiezuführsteuerkreis (200) einen Emissions- und Beleuchtungszustand der Einzel-Lichtemissionseinheiten (276) und der Großbereich-Lichtemissionseinheit (277) steuert und eine Ausgabe der Wechselrichterkreise steuert; und
einen Leistungsschalter, der den Energiezuführsteuerkreis (200) mit Leistung versorgt,
wobei der Energiezuführsteuerkreis (200) alle der Einzel-Lichtemissionseinheiten (276) und die Großbereich-Lichtemissionseinheit (277) zur selben Zeit oder in Folge emittieren und leuchten lässt als ein Abwartzustand, wenn in einer Phase, in welcher der Leistungsschalter angeschaltet ist und bevor ein vorbestimmter Erwärmstartbefehl oder ein Befehl, der eine zu benutzende Heizquelle spezifiziert, von der Betriebseinheit (E) erhalten wird durch einen Benutzervorgang,
wobei, in einem Zustand, in dem ein Erwärmstartbefehl von der Betriebseinheit (E) erhalten worden ist und ein einzelnes Erhitzungsobjekt durch eine einzelne der Heizspulen erhitzt wird, die Einzel-Lichtemissionseinheit (276), die in der Umgebung des äußeren Umfangs der relevanten Heizspule vorgesehen ist, in einen Emissions- und Beleuchtzustand geändert von dem Abwartzustand versetzt wird, und
wobei, wenn die Platzierung-des-Erhitzungsobjekts-Bestimmungseinheit (280) einen Zustand bestimmt, in welchem ein gleiches Erhitzungsobjekt auf zwei oder mehr angrenzenden Heizspulen platziert ist, die angrenzenden zwei oder mehr Heizspulen unter dem Erhitzungsobjekt zusammenwirkend betrieben werden zum Erhitzen und die Großbereich-Lichtemissionseinheit (277), vorgesehen, um den zusammenwirkenden Erwärmbereich zu umschließen, in einen Emissions- und Beleuchtungszustand geändert von dem Abwartzustand versetzt wird.

2. Das Induktionskochsystem nach Anspruch 1,
wobei die Heizspule, die der Großbereich-Lichtemissionseinheit (277) entspricht, gebildet ist durch die ringförmige Hauptheizspule (MC) angeordnet in dem Zentrumabschnitt und die Sub-Heizspulen (SC), die benachbart zu der Hauptheizspule (MC) so angeordnet sind, dass sie die Hauptheizspule (MC) umgeben,
wobei in einem Zustand, in dem eine einzelne Hauptheizspule (MC) den zusammenwirkenden Erwärmbetrieb durchführt, eine elektrische Leistung zum Heizen von einer oder mehreren der Sub-Heizspulen (SC) anders als eine oder mehrere der Sub-Heizspulen (SC), die den zusammenwirkenden Erwärmbetrieb durchführen, gestoppt oder begrenzt wird durch den Energiezuführsteuerkreis (200).

3. Das Induktionskochsystem nach Anspruch 1, wobei ein Anzeigeschirm, der ein Betriebseingabeergebnis anzeigt, in der Betriebseinheit (E) oder in der Nachbarschaft der Betriebseinheit (E) angeordnet ist, und wobei, in dem zusammenwirkenden Erwärmzustand, der Erwärmzustand auf dem Anzeigeschirm durch ein Anzeigemittel, das ein Zeichen oder eine Figur enthält, angezeigt wird.

4. Das Induktionskochsystem nach Anspruch 1, wobei, wenn die obere Platte (B, 21) in einem Hochtemperaturzustand ist, eine zweite Hochtemperatur-Anzeigeeinheit vorgesehen ist, die anzeigt, dass die obere Platte (B, 21) in dem Hochtemperaturzustand ist, mittels eines Zeichens, eines Symbols oder Licht.

## Revendications

1. Système de cuisson par induction, comprenant :
une plaque supérieure (B, 21) réalisée dans un matériau qui permet le passage de la lumière ;
une pluralité de serpentins de chauffage contigus disposés sous la plaque supérieure (B, 21), les serpentins de chauffage exécutant le chauffage par induction d'un objet chauffé placé sur la plaque supérieure (B, 21) ;
des circuits inverseurs qui fournissent un courant à haute fréquence à chacun des serpentins de chauffage ;
une unité opérationnelle (E) destinée à exécuter une opération d'entrée d'une commande qui se rapporte à la commande de chauffage de l'objet chauffé ;
une unité électroluminescente individuelle (276) disposée à proximité de la circonférence extérieure de chaque serpentin, chaque unité électroluminescente (276) montrant la surface de chauffage d'un seul serpentin de chauffage ;
une unité électroluminescente de zone étendue (277) qui montre une surface de chauffage que doit chauffer de manière coopérative deux serpentins ou plus dont les emplacements des centres sont différents, et qui sont contigus ;
une unité de détermination du placement de l'objet chauffé (280) qui détecte un état dans lequel un même et unique objet chauffé est placé sur deux serpentins ou plus dont les emplacements des centres sont différents, et qui sont contigus ;
un circuit de commande d'excitation (200) qui reçoit en entrée un signal opérationnel en provenance de l'unité opérationnelle (E), et des informations de détection en provenance de l'unité de détermination du placement de l'objet chauffé (280), le circuit de commande d'excitation (200) commandant un état d'électroluminescence des différentes unités électroluminescentes (276) et de l'unité électroluminescente de zone étendue (277), et commandant la sortie des circuits inverseurs ; et
un interrupteur qui fournit la puissance au circuit de commande d'excitation (200), dans lequel :
le circuit de commande d'excitation (200) commande l'éclairage de toutes les unités électroluminescentes individuelles (276) et de l'unité électroluminescente de zone étendue (277) en même temps ou de manière séquentielle, comme un état d'attente au cours d'une étape dans laquelle l'interrupteur est mis en service et avant qu'une commande prédéterminée de démarrage du chauffage, ou qu'une commande qui spécifie une source de chaleur à utiliser, ne soit reçue en provenance de l'unité opérationnelle (E) suite à une action d'un utilisateur ;
dans un état dans lequel une commande de démarrage du chauffage en provenance de l'unité opérationnelle (E) a été reçue, et quand un seul objet chauffé est chauffé par un seul des serpentins de chauffage, l'unité électroluminescente individuelle (276) disposée à proximité de la circonférence extérieure du serpentin de chauffage concerné, est placée dans un état d'électroluminescence différent de l'état d'attente ; et
lorsque l'unité de détermination du placement de l'objet chauffé (280) détermine un état dans lequel un même objet chauffé est placé sur deux serpentins de chauffage contigus ou plus, les deux serpentins de chauffage contigus ou plus situés sous l'objet chauffé, sont commandés de manière coopérative de façon à procéder au chauffage, et l'unité électroluminescente de zone étendue (277) disposée afin d'entourer la surface de chauffage coopérative, est placée dans un état d'électroluminescence différent de l'état d'attente.

2. Système de cuisson par induction selon la revendication 1, dans lequel :
le serpentin de chauffage qui correspond à l'unité électroluminescente de zone étendue (277), est constitué par le serpentin de chauffage principal annulaire (MC) disposé dans la partie centrale, et par les serpentins de chauffage secondaires (SC) qui sont disposés adjacents au serpentin de chauffage principal (MC) afin d'entourer le serpentin de chauffage principal (MC) ;
dans un état dans lequel un seul serpentin de chauffage principal (MC) exécute l'opération de chauffage coopératif, la puissance électrique destinée à chauffer un ou plusieurs des serpentins de chauffage secondaires (SC) autres qu'un ou plusieurs des serpentins de chauffage secondaires (SC) qui exécutent le chauffage coopératif, est arrêtée ou limitée par le circuit de commande d'excitation (200).

3. Système de cuisson par induction selon la revendication 1, dans lequel un écran d'affichage qui affiche un résultat d'entrée opérationnelle, est disposé dans l'unité opérationnelle (E) ou à proximité de l'unité opérationnelle (E), et dans l'état de chauffage coopératif, l'état de chauffage est affiché sur l'écran d'affichage par des moyens d'affichage qui comprennent un caractère ou un dessin.

4. Système de cuisson par induction selon la revendication 1, dans lequel, lorsque la plaque supérieure (B, 21) se trouve dans un état de température élevée, il est prévu une seconde unité d'affichage de température élevée qui affiche le fait que la plaque supérieure (B, 21) se trouve dans un état de température élevée, au moyen d'un caractère, d'un symbole, ou d'une lumière.
